Europäisches Patentamt

European Patent Office

Office européen des brevets

(19)

(11) **EP 0 709 713 A2**

(12) **EUROPEAN PATENT APPLICATION**

(43) Date of publication:
01.05.1996 Bulletin 1996/18

(51) Int. Cl.⁶: **G02F 1/07**, G02F 1/19

(21) Application number: 95117191.7

(22) Date of filing: 31.10.1995

(84) Designated Contracting States:
DE FR GB IT

(30) Priority: 31.10.1994 JP 267889/94
11.11.1994 JP 278156/94
10.01.1995 JP 2296/95
21.12.1994 JP 318910/94
06.01.1995 JP 856/95
06.01.1995 JP 857/95

(71) Applicants:
• FUJIKURA LTD.
Koto-ku Tokyo (JP)
• FUJIKURA KASEI CO., LTD.
Itabashi-Ku Tokyo-To (JP)

(72) Inventors:
• Anzai, Hidenobu
Itabashi-ku, Tokyo (JP)
• Edamura, Kazuya,
Fujikura Kasei Co., Ltd.
Minato-ku, Tokyo (JP)
• Akashi, Kazuya
Inbagun, Chiba-ken (JP)
• Otsubo, Yasufumi
Chiba-shi, Chiba-ken (JP)

(74) Representative: Grünecker, Kinkeldey,
Stockmair & Schwanhäusser
Anwaltssozietät
Maximilianstrasse 58
D-80538 München (DE)

(54) **Electrically controlled color display device and method**

(57) A color display device for creating a desired color display on its display surface. The device comprises at least three cells (10, 20, 30) layered one on each other, each of the cells (10, 20, 30) includes first and second transparent surfaces (11a, 11b, 21a, 21b, 31a, 31b) disposed in opposed relation to each other. The first and second transparent surfaces (11a, 11b, 21a, 21b, 31a, 31b) have first and second transparent electrode layers (12a, 12b, 22a, 22b, 32a, 32b), respectively. An electro-optical fluid composition (14, 24, 34) produced by dispersing solid particles (13, 23, 33) with an electric alignment effect in an electrical insulating medium is packed in between the first and second electrode layers (12a, 12b, 22a, 22b, 32a, 32b), the solid particles (13, 23, 33) being opaque and having a color different from colors of solid particles of photofunctional fluid compositions of the other cells. The device is additionally equipped with a voltage regulator (15, 25, 35) to adjust the strength of an electric field to be applied to between said first and second electrode layers (12a, 12b, 22a, 22b, 32a, 32b) of each of the cells (10, 20, 30).

FIG.1

## Description

### Background of the Invention

[Field of the Invention]

The present invention relates to a display device and method capable of dynamic display using an electro-optical fluid composition with an electric alignment effect (which will be referred hereinafter to as an EA fluid), and more particularly to a reflection type color display device and method capable of electrically controlling the color and image on its display plane.

[Description of the Related Art]

As typical color display devices (or panels) which can change the color and image on its display plane, there have been known a sign display device, neon display device, CRT display device, LED display device, liquid crystal display device, plasma display device, electroluminescence display device, projection type display device, and the like. There is a problem that arises with such conventional display devices, however, because the visibility deteriorates because of their unsatisfactory luminance, which makes the use difficult in a light place such as outdoors. One approach to resolution of such a visibility problem is to adopt a reflector type display device such as a rotary plate type display device and reversal plate type display device. The rotary plate type display device is designed such that an image-drawn disc-like or belt-like rotary plate is exposed through a dynamic display window while being continuously or intermittently driven to change the image or picture. On the other hand, the reversal plate type display device is made such that small-piece-like reversal plates having different image portions and colors are arranged on a display plane and individually controlled to be successively reversed to accomplish a dynamic display. These conventional reflector type display devices have been disadvantageous because the image movement is based on a mechanical means, with the result that significant limitation is imposed on the number of pictures displayed, their structures become complicated and tend to be easily broken down and cause noise generation. Particularly, since the conventional reflector type display devices can not gradually or continuously change the color tone of each picture element (pixel), limitation is imposed in application with conventional display devices because of being not capable of so-called full-color expression.

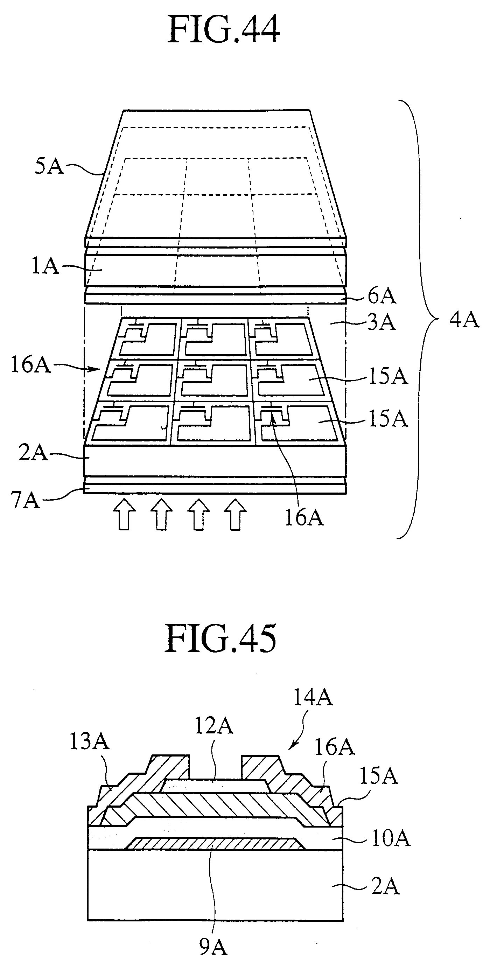

Moreover, in a conventional liquid crystal display device, as shown in Fig. 44 a liquid crystal 3A is enclosed between transparent glass-made substrates 1A and 2A to make up a liquid crystal panel 4A. This liquid crystal panel 4A is equipped with a polarizing plate 5A on the upper side glass substrate 1A and provided with a common electrode under the upper side glass substrate 1A. Further, the liquid crystal panel 4A has a polarizing plate 7A under the lower side glass substrate 2A. A fine electric circuit for driving the liquid crystal is formed on the liquid crystal side surface of the lower side glass substrate 2A. Fig. 45 illustrates an ordinary arrangement of the liquid crystal driving electric circuit, which is made as a drive circuit using thin film transistors (TFT). In Fig. 45, a gate electrode 9A is formed on the transparent substrate 2A before being covered with a gate insulating layer 10A. On the gate insulating layer 10A there are successively formed an a-Si film 11A and etch stopper layer 12A which are interposed between a source electrode 13A and a drain electrode 14A. The drain electrode 14A is connected with a pixel electrode 15A. That is, a switching element 16A is constructed with a thin film transistor comprising the gate electrode 9A, source electrode 13A and drain electrode 14A. This switching element 16A selectively controls the energization to the pixel electrode 15A so that an electric field due to the energization to the pixel electrode 15A causes the orientations of the liquid crystal molecules, thus carrying out the switching control between a display state and a non-display state.

There is a problem which arises with such a liquid crystal display device, however, because the liquid crystal composition itself is still costly, while the manufacturing cost is extremely high for manufacturing the liquid crystal driving fine electric circuit requires polarizing plates and various filters in addition to a considerably high circuit manufacturing technique. Moreover, such a liquid crystal device is disadvantageous because the oriented state is immediately broken off in response to the removal of the applied electric field and, hence, it is necessary that a given electric field be always applied to the liquid crystal. In addition, the liquid crystal absorbs light with specific wavelengths and, hence, has limits in coloring and, as a result, the display device has limits in application. Furthermore, in a color liquid crystal display device, the dark-bright contrast and pure black expression are unsatisfactory and the visible angle is small, while a large-sized screen is unobtainable and the light resistance is low.

### Summary of the Invention

It is therefore an object of the present invention to provide a color display device which is capable of electrically controlling the color and image on its display plane.

One feature of this invention is the utilization of an electro-optical fluid composition (an EA fluid). This composition is a fluid produced, for example, by dispersing solid particles in an electrical insulating medium, and in response to application of an electric field thereto, the solid particles establish dielectric polarization, and are linked with each other and arranged in the field direction due to the electrostatic attractive force caused by the dielectric polarization, thus producing chain bodies (configurations). In addition, some of solid particles have an electrophoretic property, and in response to application of an electric field thereto, are electrophoretically moved toward electrode sections to be arranged and oriented to take an arranged massive structure. The fact that the arrangement and orientation of particles take place under an electric field is called an electric field arrangement effect, and the solid particles which exhibit such an electric alignment effect are referred to as electric alignment particles (EA particles). The operational principle of the EA fluid will become apparent as the description proceeds.

According to the present invention, there is provided a color display device comprising at least three cells layered one on each other, each of the cells including: first and second transparent surfaces disposed in opposed relation to each other; first and second transparent electrode layers formed on the first and second transparent surfaces, respectively, to face each other; an electro-optical fluid composition produced by dispersing solid particles with an electric alignment effect in an electrical insulating medium and packed in between the first and second transparent electrode layers, the solid particles being opaque and having a color different from colors of solid particles of electro-optical fluid compositions of the other cells; and means for adjusting a strength of an electric field and for applying the adjusted electric field to between the first and second transparent electrode layers. Further, the color display device further has a third transparent electrode layer formed on the first transparent surface having the first transparent electrode layer thereon to be adjacent to the first transparent electrode layer, and is equipped with switching means for selectively applying the electric field to between the first and third transparent electrode layers, and between the first and second transparent electrode layers.

In addition, according to this invention, there is provided a color display device comprising: a storage plate having a plurality of hole-like storage sections formed to be successively arranged therein; first and second electrode layers fixedly secured onto first and second surfaces of the storage plate, at least one of the first and second electrode layers being divided into a plurality of sections each being shaped to a configuration of an opening of each of the plurality of storage sections; an electro-optical fluid composition produced by dispersing solid particles with an electric alignment effect in an electrical insulating medium and packed in each of the storage sections interposed between the first and second transparent electrode layers; and means for adjusting a voltage and for applying the adjusted voltage to between the first and second electrode layers. Each of the electro-optical fluid compositions enclosed in the plurality of storage sections contains one of red, blue and yellow pigments, and the storage section holding the photofunctional fluid composition containing the red pigment, the storage section holding the photofunctional fluid composition containing the blue pigment, and the storage section holding the photofunctional fluid composition containing the yellow pigment are disposed to be adjacent to each other and grouped into one storage section set.

Furthermore, according to this invention, there is provided a method of color-displaying a desired pattern by using a plurality of cells each serving as a picture element, each of the plurality of cells including an electro-optical fluid composition produced by dispersing solid particles with an electric alignment effect in an electrical insulating medium and at least one of the solid particles and the electrical insulating medium contains a pigment whose color is different from colors of the pigments of the other cells, the color-display method comprising the steps of: successively arranging the cells having the photofunctional fluid composition different in color from each other; and changing the color of each of the plurality of cells by selectively controlling application of an electric field to the photofunctional fluid composition of each of the plurality of cells.

Still further, according to this invention, there is provided a method of color-displaying a desired pattern by using a plurality of cells each serving as a picture element, each of the plurality of cells including an electro-optical fluid composition produced by dispersing solid particles with an electric alignment effect in an electrical insulating medium, the color-display method comprising the steps of: using at least one of the cells having the photofunctional fluid composition colored in red with a red pigment, at least one of the cells having the photofunctional fluid composition colored in blue with a blue pigment, and at least one of the cells having the photofunctional fluid composition colored in yellow with a yellow pigment; and changing the color of each of the cells by selectively controlling application of an electric field to the photofunctional fluid composition of each of the of cells. The solid particles of the photofunctional fluid compositions in all the cells contain a black pigment to be colored in black, and the electrical insulating medium of each of the photofunctional fluid compositions selectively contains one of red, blue and yellow pigments, and the electric field is applied to align the solid particles of each of the photofunctional fluid compositions so that the color of the pigment of the electrical insulating medium appears, and the application of the electric field is stopped to randomly disperse the solid particles of each of the photofunctional fluid compositions so that the color of the pigment of the solid particles appears.

Moreover, according to this invention, there is provided a transmission type color display device comprising a plurality of cells each including: first and second transparent electrode plates disposed in opposed relation to each other, two or more transparent electrode layers spaced from each other being formed on the first and second transparent electrode plates, and at least one of the first and second transparent electrode plates being colored; and an electro-optical fluid composition produced by dispersing solid particles with an electric alignment effect in an electrical insulating medium and packed in between the first and second transparent electrode plates.

Furthermore, according to this invention, there is a display device comprising: first and second transparent surfaces disposed in opposed relation to each other; first and second transparent electrode layers formed on the first and second transparent surfaces, respectively, to face each other; means for performing on-off control of application of an electric field to between the first and second electrode layers; and an electro-optical fluid composition produced by dispersing solid particles with an electric alignment effect in an electrical insulating medium and packed in between the first and second transparent electrode layers, the solid particles being made up of at least first and second groups of solid particles which are different in diameter from each other.

Still further, in accordance with the present invention, there is provided a reflector type color display device comprising one or more cells serving as picture elements, each of the cells including: first and second transparent electrode plates disposed in opposed relation to each other and having first and second electrode layers, respectively, the first electrode plate being transparent and serving as a display surface and the second electrode plate being opaque and colored; and an electro-optical fluid composition produced by dispersing solid particles with an electric alignment effect in an electrical insulating medium and packed in between the first and second transparent electrode plates, the electrical insulating medium being transparent and the solid particulate being colored to have a color different from the color of the second electrode plate.

Moreover, in accordance with this invention, there is provided a color display device comprising one or more cells serving as picture elements, each of the cells including: first and second transparent electrode plates disposed in opposed relation to each other and having first and second electrode layers, respectively; and an electro-optical fluid composition produced by dispersing solid particles with an electric alignment effect in an electrical insulating medium and packed in between the first and second transparent electrode plates, the solid particles and the electrical insulating medium being produced to have different colors from each other.

Brief Description of the Drawings

The object and features of the present invention will become more readily apparent from the following detailed description of the preferred embodiments taken in conjunction with the accompanying drawings in which:

Fig. 1 is a cross-sectional view showing a picture element of a color display device according to a first embodiment of the present invention;
Fig. 2 is a cross-sectional view showing a structure of each of EA particles to be used in this invention;

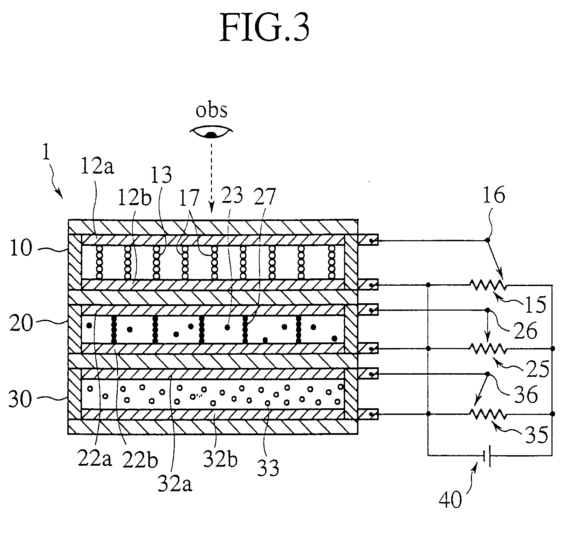

Fig. 3 is a cross-sectional view showing one use mode of the color display device according to the first embodiment;
Fig. 4A is a cross-sectional view showing a state of an EA fluid at the time of no application of an electric field thereto;
Fig. 4B is a cross-sectional view showing a state of an EA fluid taken in response to application of an electric field thereto;
Fig. 5 is a cross-sectional view showing an operational state of EA particles made in response to application of an electric field to an EA fluid;
Fig. 6 is a cross-sectional view for explanation of the operational principle of EA particles of an EA fluid.
Fig. 7 is an illustration of an electrode structure and electrical circuit of each cell of a color display device according to a second embodiment of this invention.
Fig. 8 is a cross-sectional view showing one operational mode of an EA fluid in the Fig. 4 second embodiment.
Fig. 9 is a cross-sectional view showing another operational mode of the EA fluid in the Fig. 4 second embodiment.
Fig. 10 is an exploded, perspective view showing a color display device according to a third embodiment of this invention;
Fig. 11 is a plan view showing a lower transparent substrate of the color display device according to the third embodiment;
Fig. 12 is a plan view showing EA fluid storage sections of the color display device according to the third embodiment;
Fig. 13 is a cross-sectional view showing a portion of the color display device according to the third embodiment;
Fig. 14 is an exploded, perspective view showing a color display device according to a fourth embodiment of this invention;
Fig. 15 shows a portion of an electrode layer of the Fig. 14 color display device;
Fig. 16 shows an electro-aligned state of EA particles in the Fig. 14 color display device;
Fig. 17 illustrates a modification of the Fig. 14 color display device;
Fig. 18A is a cross-sectional view showing a color display device according to a fifth embodiment of this invention which is in an zero-field state;
Fig. 18B is a cross-sectional view showing a color display device according to a fifth embodiment of this invention which is in an electrified state;
Fig. 19 is a development of structures of electrode plates and an arrangement of a circuit of a color display device according to a sixth embodiment of this invention;
Fig. 20 is a cross-sectional view showing an operational mode of the Fig. 19 color display device;

Fig. 21A is a plan view showing a picture element unit of a color display device according to a seventh embodiment of this invention;

Fig. 21B is a cross-sectional view taken along a line X-X' of Fig. 21A;

Figs. 22A and 22B are cross-sectional views showing one picture element of a color display device according to an eighth embodiment of this invention;

Fig. 23 is a development showing a color display device according to an ninth embodiment of this invention;

Fig. 24 is a cross-sectional view showing one operational mode of the color display device according to the ninth embodiment;

Figs. 25A and 25B are cross-sectional view showing a picture element of a color display device according to a tenth embodiment of this invention;

Fig. 26 is a development showing a picture element of a color display device according to an eleventh embodiment of this invention;

Fig. 27 is a cross-sectional view showing one operational mode of the Fig. 26 picture element of the eleventh embodiment;

Fig. 28A is a plan view showing a picture element unit of a color display device according to a twelfth embodiment of this invention;;

Fig. 28B is a cross-sectional view taken along line X-X' of Fig. 28A;

Figs. 29A and 29B are cross-sectional views showing a picture element of a color display device according to a thirteenth embodiment of this invention;

Fig. 30 is a development showing an electrode structure and an electric circuit arrangement of a color display device according to a fourteenth embodiment of this invention;

Fig. 31 is a cross-sectional view showing one operational mode of the Fig. 30 color display device;

Fig. 32A is a plan view showing a picture element unit of a color display device according to a fifteenth embodiment of this invention;

Fig. 32B is a cross-sectional view taken along line X-X' of Fig. 32A;

Fig. 33 is a graphic illustration of the variation of the transparency of an EA fluid in accordance with the changes of the EA particulate concentration and the strength of the electric field to be applied 10 cSt;

Fig. 34 is a graphic illustration of the variation of the transparency of an EA fluid in accordance with the changes of the EA particulate concentration and the strength of the electric field to be applied 50 cSt;

Fig. 35 is a graphic illustration of the variation of the transparency of an EA fluid in accordance with the changes of the EA particulate concentration and the strength of the electric field to be applied for an EA fluid dispersed in an insulating medium with a kinetic viscosity of 100 cSt;

Fig. 36 is a graphic illustration of the variation of the transparency of an EA fluid in accordance with the changes of the kinematic viscosity of an electrical insulating medium and the strength of the electric field to be applied for an EA fluid in the case that the EA particulate concentration is fixed to 5.0% by weight;

Fig. 37 is a graphic illustration of the variation of the transparency of an EA fluid in accordance with the changes of the kinematic viscosity of an electrical insulating medium and the strength of the electric field to be applied in the case that the EA particulate concentration is fixed to 7.5% by weight;

Fig. 38 is a graphic illustration of the measurement results of the electric field responsibility of an EA fluid in this invention;

Fig. 39 is a graphic illustration of transmitted light spectra without an electric field to an EA fluid and at application of an electric field thereto in this invention;

Fig. 40 is a graphic illustration of transmitted light spectra of an electrical insulating medium of an EA fluid in this invention;

Fig. 41 is a graphic illustration of transmitted light spectra of an EA fluid in which yellow-colored EA particles are dispersed in a blue-colored electrical insulating medium, without an an electric field to the EA fluid and at application of an electric field thereto;

Fig. 42 is a graphic illustration of transmitted light spectra without an electric field to an EA fluid, at application of an electric field between a first reference electrode and a facing electrode, and at application of an electric field between the first reference electrode and an second electrode;

Fig. 43 is a graphic illustration of the variation of the transparency of an EA fluid in the eighth embodiment of this invention at application of an electric field;

Fig. 44 shows a structure of a conventional liquid crystal display device; and

Fig. 45 is a cross-sectional view showing a principal portion of a conventional thin-film transistor circuit.

Description of the Preferred Embodiment

First Embodiment

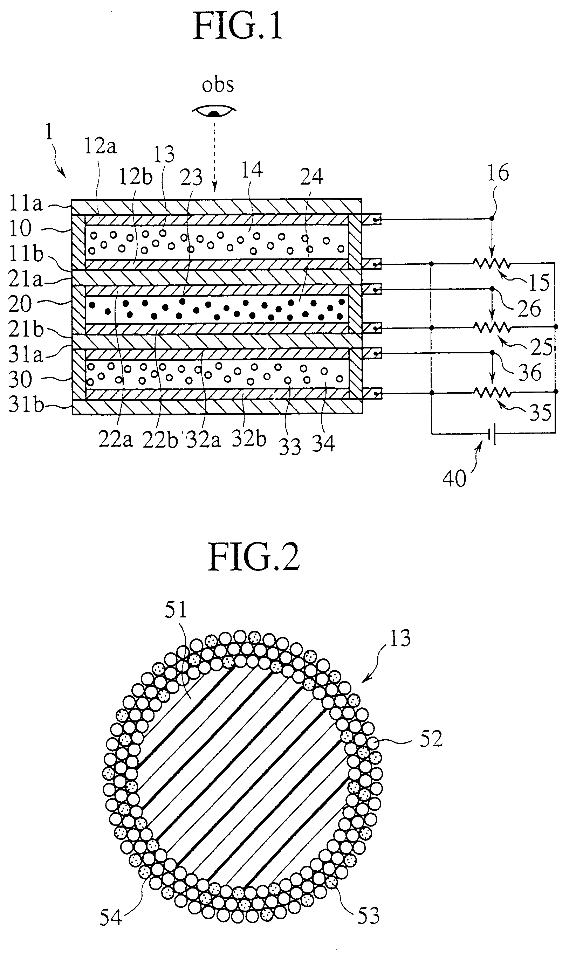

Referring now to Fig. 1, which shows a cross-sectional view of one picture element of the color display device and circuit arrangement thereof, a description will be made in terms of a color display device according to a first embodiment of the present invention.. This one picture element, designated with numeral 1, is composed of three cells 10, 20 and 30 stacked on each other. These cells 10, 20 and 30 substantially have the same structure as illustrated, and the description of the common parts will be given for cell 10. Cell 10 comprises two plate-like transparent substrates (surfaces) 11a, 11b disposed in opposed relation to each other, the one transparent substrate 11a being, on its inner surface, equipped with a transparent reference electrode (layer) 12a, while the other transparent substrate 11b being, on its inner surface, provided with a transparent facing electrode (layer) 12b. In this embodiment, the transparent substrates 11b, 21a of the adjacent cells 10, 20 are constructed with one transparent plate, and similarly, the transparent substrates 21b, 31a of the adjacent cells 20, 30 are formed with one transparent plate. Accordingly, the three cells 10, 20 and 30 are stacked on top of one another so that the transparent substrates 11a, 11b, 21a, 21b, 31a and 31b are vertically aligned with each other.

Between the reference electrode 12a and facing electrode 12b of the cell 10, there is packed an EA fluid 14 produced by adding EA particles 1 into an insulating medium. Similarly, the other cells 20, 30 contains EA fluids 24, 34 respectively produced by putting EA particles 23, 33 into an electrical insulating medium. The EA particles 13, 23 and 33 of the EA fluids 14, 24 and 34 are opaque and colored in yellow, red and blue, respectively.

As described above, the EA fluid 14 contained in cell 10 includes the EA particles in a silicone oil being the electrical insulating medium, and as shown in Fig. 2 each of the EA particles 13 is an inorganic and organic composite particulate formed with a core body 51 made of a polyacrylate being a polymer compound and a surface layer 54 comprising fine particles made of a titanium hydroxide being an inorganic EA material and a yellow pigment 53. The reflected light from the EA fluid 14 turns yellow due to the color of the EA particles 13. The EA fluids 24, 34 of the other cells 20, 30 are the same as the EA fluid 14 of the cell 10 except that the yellow pigment 53 of the surface layer 54 is replaced with red pigment and blue pigment, respectively, and the reflected lights therefrom turn red and blue due to the colors of the pigments changed. In this state, when the observer Obs sees the picture element 1 of this color display device from above the cell 10, the picture element 1 appears to be yellow which is a color of the EA fluid 14 of the cell 10.

Electric wires are protruding out from the reference electrode 12a and the facing electrode 12b so that, for example, the facing electrode 12b is connected with the negative (-) terminal of a power supply 40 and the reference electrode 12a is connected with an output terminal 16 of a voltage regulator 15. For example, this voltage regulator 15 is, at its one fixed terminal, coupled to the positive terminal (+) of the power supply 40, the other fixed terminal thereof being connected through a load resistor to the negative terminal of the power supply 40, thus constituting a variable resistance type voltage regulator. This voltage regulator 15 can adjustably apply an electric field to between the reference electrode 12a and facing electrode 12b of the cell 10. The cells 20, 30 have similar electric field adjusting means so as to be separately adjustable in electric field.

Now, let it be assumed that the outputs of the voltage regulators 15, 25 and 35 are separately adjusted so that a relatively high voltage is applied to between the electrodes 12a, 12b of the cell 10, a middle voltage is applied to between the electrodes 22a, 22b of the cell 20, and no voltage is applied to between the electrodes 32a, 32b. In this case, the EA particles 13 of the cell 10 are aligned vertically between the electrodes 12a, 12b due to the EA effect exhibited in response to the established electric field, with the result that the cell 10 becomes transparent when viewed from the observer Obs side. On the other hand, since the cell 20 is responsive to the middle voltage, the polarization of the EA particles 23 is low and, hence, only a portion of the EA particles 23 form chain configurations, while the remaining EA particles 23 are still in the randomly dispersing state. Whereas, the number of the EA particles 23 remaining in the randomly dispersing state decreases, with the result that the picture element 1 turns semi-transparent (translucent) and red in color when viewed from the observer Obs side. On the other hand, since receiving no voltage, the cell 30 is opaque and blue as it is. However, the color of the cell 30 is mixed with the semi-transparent red color of the cell 20 placed thereon, whereby the picture element 1 wholly turns purple being a mixture of blue and red when viewed from the observer Obs side.

Furthermore, let it be assumed that a middle voltage is applied to the cell 10, a high voltage is applied to the cell 20 and no voltage is applied to the cell 30. In this case, the picture element 1 wholly appears to be green which is a mixture of blue and yellow. Moreover, in a case where a middle voltage is supplied to the cell 10 and no voltage is supplied to the cell 20, the picture element 1 wholly appears to be orange being a mixture of red and yellow. Still further, if middle voltages are applied to the cells 10, 20 and 30, the picture element 1 turns black being a mixture of yellow, red and blue. On the other hand, if high voltages are applied to the cells 10, 20 and 30, all the cells 10, 20 and 30 become transparent. Accordingly, in this case, if a background plate, not shown, whose color is white is located on the rear side of the picture element 1 or the transparent plate 31b itself is made as an opaque white plate, the picture element 1 wholly appears to be white in color when viewed from the observer Obs side.

Thus, in the picture element 1 of this color display device, the voltage regulators 15, 25 and 35 are individually controlled to allow expressions with arbitrary colors, thus providing a full-color reflector type color display device if the picture element 1 has the number of cells necessary for the full-color expression.

Although in the first embodiment the EA fluids 14, 24 and 34 of the three cells are colored in the order of yellow, red and blue, this invention is not limited to this order. In addition, although yellow, red and blue, i.e., three primary colors in achieving the full-color expression with reflected light, are employed in this embodiment, it is also possible to freely use other colors. Moreover, a black-colored cell can additionally be used in order to improving the image contrast.

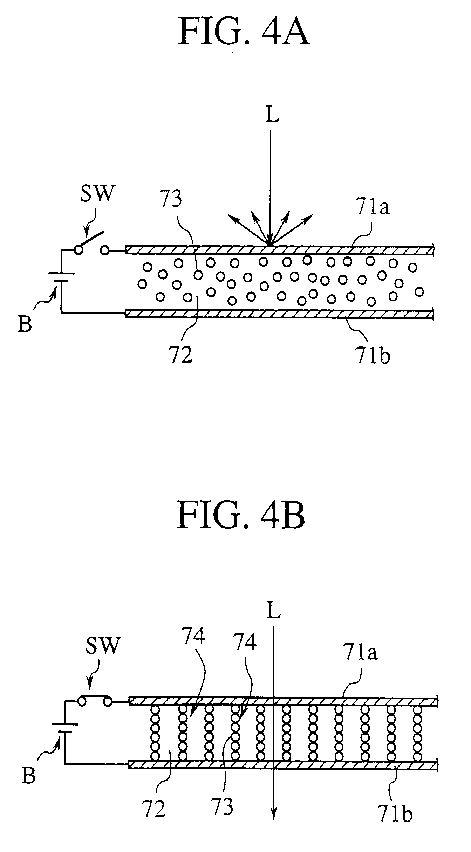

A general description will be made hereinbelow in terms of the operational principle of the EA fluid in this invention. In Figs. 4A and 4B, two transparent electrodes 71a, 71b are electrically coupled through a switch SW to a power supply B. In addition, between the two transparent electrodes 71a, 71b there is packed an EA fluid produced by dispersing EA particles 73 in an electrical insulating medium 72. In a state shown in Fig. 4A in which the switch SW is open so as not to apply an electric field to between the transparent electrodes 71a, 71b, the EA particles 73 randomly disperse and float in the electrical insulating medium 72. Accordingly, when light L is incident on one transparent electrode 71a side, this light L is irregularly reflected on the surfaces of the EA particles 73 so that this system (cell) appears to be opaque when being viewed from the light L incidence side and has a color which is of the EA particles 73.

On the other hand, In a state shown in Fig. 4B in which the switch SW is closed so that an electric field is applied to between the transparent electrodes 71a, 71b, the EA particles 73 present between the transparent electrodes 71a, 71b are aligned or arranged vertically therebetween so as to form chain configurations 74. The blending ratio of the EA particles 73 into the electrical insulating medium 72 is less than 15% by weight, more preferably 10% by weight, as will be described later, and when these EA particles 73 are aligned to form chain configurations 74, there is no EA particles 73 in spaces between these chain configurations 74 whereby the light L incident from the transparent electrode 71a side can pass in the spaces therebetween. Accordingly, in this state, the system turns transparent and the color of the EA particles 73 disappears.

If the switch SW again is opened, the electric field between the transparent electrodes 71a and 71b vanishes so the chain configurations 74 are broken to allow the EA particles 73 to again randomly disperse and float in the electrical insulating medium 72, with the result the system turns into the original opaque state. The speed at which the EA particles 73 return to the original state depends upon the viscosity of the electrical insulating medium 72, the difference in specific gravity between the electrical insulating medium 72 and the EA particles 73, the temperature, the degree of vibration, and so on. Accordingly, if as will be described in a second embodiment a reference (first) electrode and an adjacent (second) electrode are formed on one transparent substrate and an electric field is applied therebetween, the EA particles 73 form chain configurations along a direction parallel to the electrode surfaces, which electrically makes the system return to the opaque state. Accordingly, the change between the transparent state and the opaque state is quickly accomplishable, drastically improving the response to the electric field.

The strength of the electric field to be applied to between the transparent 71a and 71b relies on the characteristic of the EA particles 73, while being selected from the range of 0.1 kV/mm to 5.0 kV/mm in voltage. If the EA particles are inorganic and organic composite particles, it is preferable to be in the range of 0.25 kV/mm to 1.5 kV/mm.

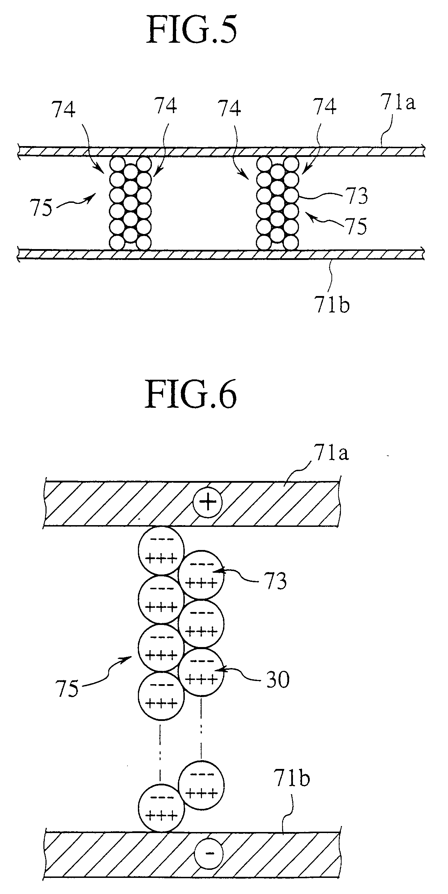

Although as described above the EA particles 73 form chain configurations in response to application of an electric field, if the inclusion of the EA particles 73 increases to exceed 1% by weight, a plurality of chain configurations, but not one chain configuration, are joined with each other to organize columns 75 as shown in Fig. 5. In each column 75, the EA particles 73 of the plurality of chain configurations are longitudinally shifted to one another. As to this phenomenon, the inventors assume that the EA particles 73, dielectric-polarized into (+) pole portions and (-) pole portions as shown in Fig. 6, becomes more stable in energy when being alternately aligned due to the attraction between the (+) pole portions and the (-) pole portions.

Accordingly, in cases where the content of the EA particles 73 is large, a number of columns 75 are produced between the electrodes 71a and 71b, and the transmitted light intensity increases by the production. In this case, since a number of EA particles 73 are grouped into a plurality of columns 75, the separation between the adjacent columns 75 results in being larger as compared with the formation of a number of single chain configurations, which serves to increase the transmitted light intensity.

As described followings, the diameters of the EA particles 30 are determined to be in the range of 0.1 to 500 mm, more preferably 5 to 200 mm for the reason that the EA particles 73 function as light scattering type particles or light reflection type particles. As well known, the wavelength of the visible light is in the range of 380 to 780 nm, that is, 0.38 to 0.78 mm, and for the light with such a wavelength being scattered or reflected for the transmitted light control purposes, the diameters of the EA particles 30 need to be at least more than 0.1 mm, more preferably over 5 mm. On the other hand, in a case where ultra-fine conductive particles having diameters smaller than the wavelengths of the visible light causing the Brownian motion, for example, having diameters of 5 nm to several tens nm (= 0.005 to 0.02 mm) are dispersed in the electrical insulating medium 72, the orientation of the ultra-fine particles is considered possible, while in this case the light transmission mechanism is totally different from that in this invention, with the result that the ultra-fine particles are dispersed in a state with no electric field so as to completely permit the transmission of light and are oriented in a state with application of an electric field so as to scatter and attenuate light. That is, undesirable and totally different behaviors take place.

Furthermore, $TiBaO_4$ particles are considered as the foregoing ultra-fine conductive particles, while the specific gravity of $TiBaO_4$ is as great as being in the range between 4 and 6. Supposing that the $TiBaO_4$ particles are made to be large in diameter for the light reflecting purposes, they gravitationally sink for the difference in specific gravity from the electrical insulating medium 29, whereby difficulty is encountered to uniformly disperse the particles. In addition, for uniformly dispersing the $TiBaO_4$ particles in the electrical insulating medium 72, the electrical insulating medium 72 needs to be large in specific gravity, while the electrical insulating medium with a specific gravity of approximately 4 to 6 does not exist in the world. On the other side, the necessary specific gravity of the inorganic and organic composite particles 73 in this invention is readily adjustable to around 1.2 as described above, which allows the utilization of various kinds of electrical insulating media.

Secondly, considering a coloring aspect, difficulty is experienced to color the foregoing ultra-fine particles, and even assuming that the coloring is possible, the diameters of the particles are too small, for which reason the ultra-fine particles dispersed in the electrical insulating medium 72 is impossible to visibly color. Accordingly, the ultra-fine particles can not provide the change between the colored and opaque state and the colorless (achromatic), transparent state which is required in this invention.

Second Embodiment

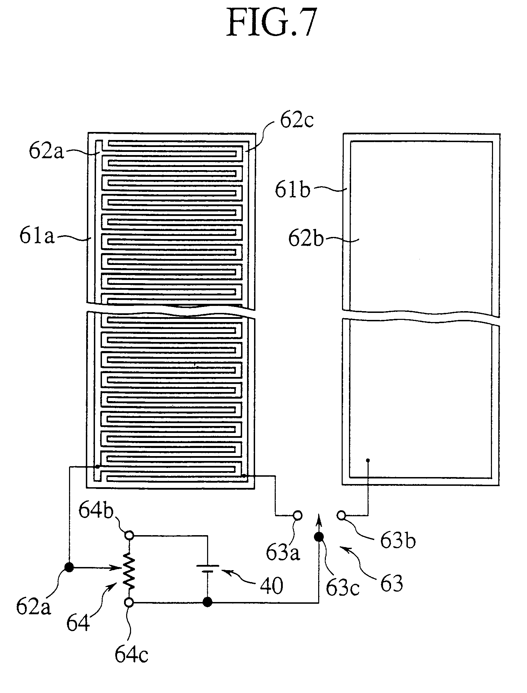

Secondly, a description will be taken in conjunction with Fig. 7 in terms of a color display device according to a second embodiment of the present invention, where a picture element of the color display device is basically same as the foregoing first embodiment except for electrode structure and electrical circuit arrangement of each cell. Fig. 7 is an illustration of an electrode structure and electrical circuit of each cell of the color display device according to this second embodiment. In Fig. 7, on one transparent substrate 61a of the cell there are formed a comb-like transparent reference electrode (first electrode) 62a and a comb-like transparent adjacent electrode (second electrode) 62c. The tooth portions of the comb-like transparent reference electrode 62a are alternately located or inserted in spaces or gaps between the tooth portions of the comb-like transparent adjacent electrode 62c. On the other hand, a facing electrode 62b is wholly formed on the other transparent substrate 61b of the cell.

The electrical circuit of the cell is arranged as illustrated in Fig. 7. That is, the adjacent electrode 62c formed on the transparent substrate 61a is in connecting relation to a fixed contact (terminal) 63a of a change-over switch 63, while the facing electrode 62b formed on the other transparent substrate 61b is in connecting relation to a fixed contact 63b of the same change-over switch 63. The movable contact 63c of the change-over switch 63 is connected with, for example, the negative (-) side of a power supply 40. Further, the reference electrode 62a formed on the transparent substrate 61a comes into connection with an output terminal 64a of a voltage regulator 64. This voltage regulator 64 is constructed with, for example, a variable resistor, one fixed terminal 64b of which is coupled to the positive (+) side of the aforesaid power supply 40 and the other fixed terminal 64c of which is connected through a load resistor to the negative (-) side of the same power supply 40.

With the electrical circuit thus arranged, in accordance with the switching operation of the change-over switch 63, an electric field, adjustable through the voltage regulator 64, can selectively be applied to between the reference electrode 62a and the adjacent electrode 62c or between the reference electrode 62a and the facing electrode 62b.

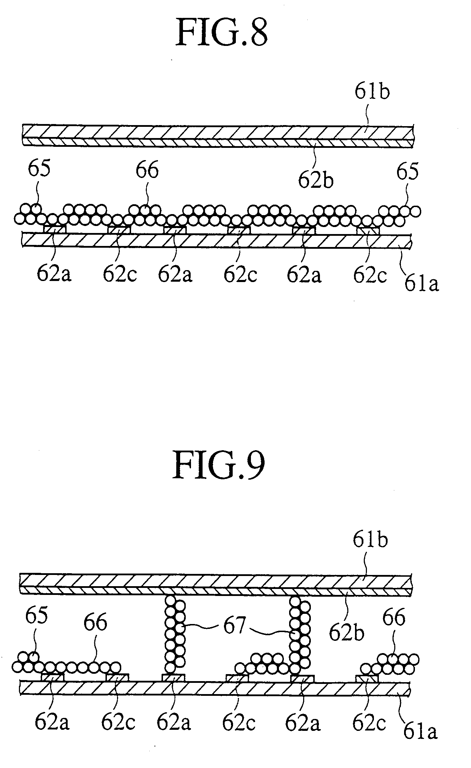

The cell operates as follows with the aforementioned electrical circuit. That is, when the change-over switch 63 is first connected to the facing electrode side 62b and the voltage regulator 64 is adjusted to a high voltage side, a high voltage is applied to between the reference electrode 62a and the facing electrode 62b, with the result that the EA fluid present between both the electrodes 62a, 62b is greatly electro-aligned to form chain configurations in directions normal to the transparent substrate 61a surface to make the cell transparent. Subsequently, when the change-over switch 63 is switched to the adjacent electrode 62c side, a voltage is applied between the reference electrode 62a and the adjacent electrode 62c. At this time, in the EA fluid, in response to the generated electric field, as shown in Fig. 8 the EA particles 65 (13 in Fig. 2) are electro-aligned between the reference electrode 62a and the adjacent electrode 62c to form chain configurations 66 in directions parallel to the transparent substrate 61a. These chain configurations 66 cover the transparent substrate 61a surface so that the cell becomes colored and opaque.

If the voltage regulator 64 is adjusted to a middle voltage in the previously mentioned process of switching operation, as typically shown in Fig. 9, a portion of the EA particles 65 remain in the chain-configured states 67 perpendicular to the transparent substrate 61a, while the other portion of the EA particles 65 takes the chain-configured states 66 parallel thereto, the result is that the cell turns into a colored and semi-transparent state and the reflected light of the cell placed under this cell partially appears to produce a mixed color. The degree of the semi-transparency depends upon the ratio of the perpendicularly aligned chain configurations 67 to the parallel aligned chain configurations 66, which in turn depends upon the strength of the applied electric field. Accordingly, the ratio is adjustable through the voltage regulator 64.

In this second embodiment, the picture element of the color display device is constructed with three cells layered to form a laminated structure. The color change of this color display device is immediately responsive to the operations of the change-over switch and voltage regulator of each cell, thus allowing this color display device to serve as a full-color display device with an excellent response to an applied electric field.

In the first or second embodiment, the circuit arrangement is not limited to that as illustrated, and it is also possible to use different devices having the same functions as the change-over switch and voltage regulator. For example, an inverter is usable which has a switching function and a gradually or continuously voltage adjusting function. Further, in the second embodiment, setting the reference electrode 62a, adjacent electrode 62c and facing electrode 62b to reversed polarities is also possible. Moreover, although having comb-like configurations, the patterns of the reference electrode 62a and the adjacent electrode 62c are not limited to this comb-like configurations, and are allowed to have different configurations such as spiral configurations and branch-like configurations.

Third Embodiment

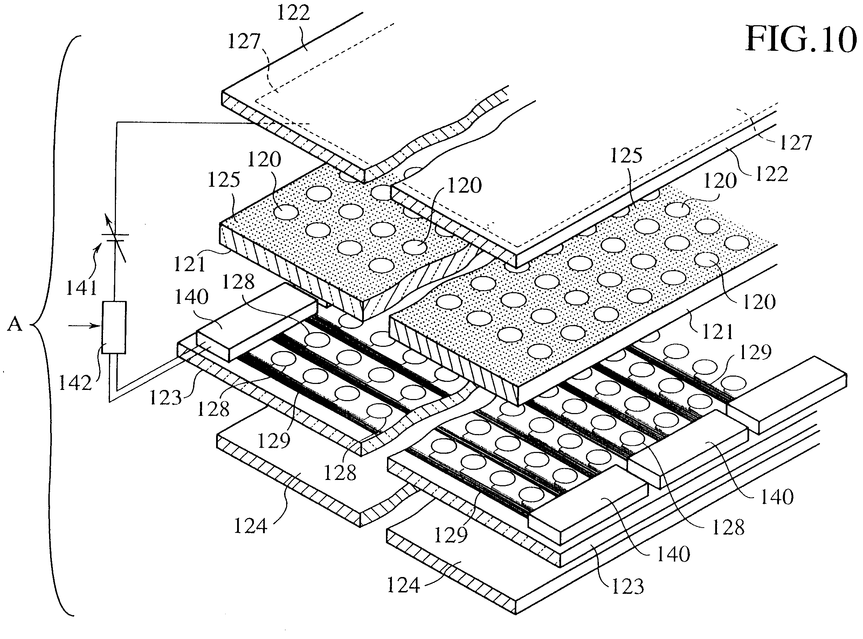

Fig. 10 is an exploded, perspective view showing a color display device according to a third embodiment of this invention. In Fig. 10, this color display device, designated at character A, is basically composed of a transparent storage plate 121 having a number of hole-like storage sections 120, an upper transparent substrate 122 for covering the upper surface of the storage plate 121, a lower transparent substrate 123 for covering the lower surface (rear surface) of the storage plate 121, and a plate-like back light 124 disposed at the rear surface side of the lower transparent substrate 123. On the top surface of the storage plate 121 there is coated a black mask 125 produced by applying a black painting material thereonto. Although in the illustration the black mask 125 is formed by the application of the painting material, it is also possible that the storage plate 121 itself is constructed with a black material to wholly have a black color. In addition, the storage plate 121 is constructed with an electrical insulating material. Further, on the substantial whole of the lower surface of the upper transparent substrate 122 there is formed a transparent electrode layer 127 made of an ITO (indium tin oxide) film or the like. This transparent electrode layer 127 is formed so as to close over upper openings of a number of storage sections 120 of the storage plate 121. Accordingly, the transparent electrode layer 127 is not always required to be formed on the substantial whole surface of the transparent substrate 122, and it is also appropriate that the transparent electrode layer 127 is made up of a number of division electrodes formed to the configurations of the openings of the storage sections 120 and electrically coupled to each other.

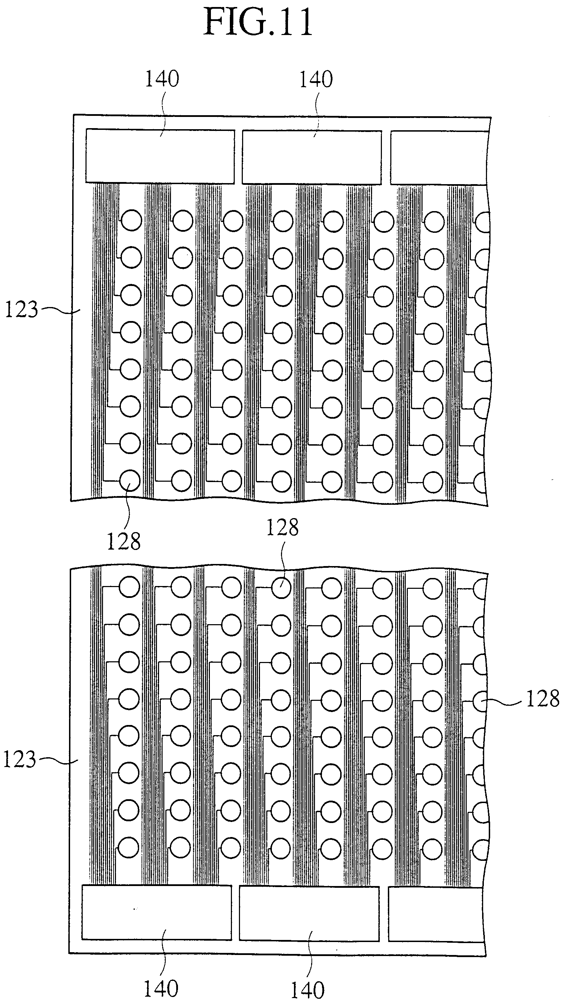

On the other hand, the lower transparent substrate 123 is fabricated to have a slightly larger dimension as compared with the storage plate 121. On the top surface of the lower transparent substrate 123 there are formed a number of circular transparent electrode layers 128 which have configurations and sizes capable of closing the lower openings of the storage sections 121. Electric wires 129 are drawn out from the transparent electrode layers 128 so as to run in the portions between the transparent electrode layers 128 as shown in Fig. 11, before being led up to corner sections of the lower transparent substrate 123 to be connected with driving ICs 140 disposed at the corner sections thereof. The driving ICs are electrically connected with each other and coupled to a common variable power supply 141. This variable power supply 141 is also connected to the transparent electrode layer 127 on the upper transparent substrate 122. In addition, a drive control unit such as a timing control circuit 142 is placed between the driving ICs 140 and the variable power supply 141 so that the driving ICs 140 are coupled through the drive control unit 142 to the variable power supply 141. This allows voltages to be selectively applied through the driving ICs 140 to the necessary number of the transparent electrode layers 128, and further applied to the transparent electrode layer 127. In other words, an electric field can be applied to between the transparent electrode layer 127 on the upper transparent substrate 122 and a desired transparent electrode 128 on the lower transparent substrate 123, that is, to a desired storage section 120. The driving ICs 140, variable power supply 141 and drive control unit 142 have arrangements similar to those of conventional devices such as a liquid crystal television and computer liquid crystal display device, and various prior devices or units are usable as the driving ICs 140, variable power supply 141 and drive control unit 142.

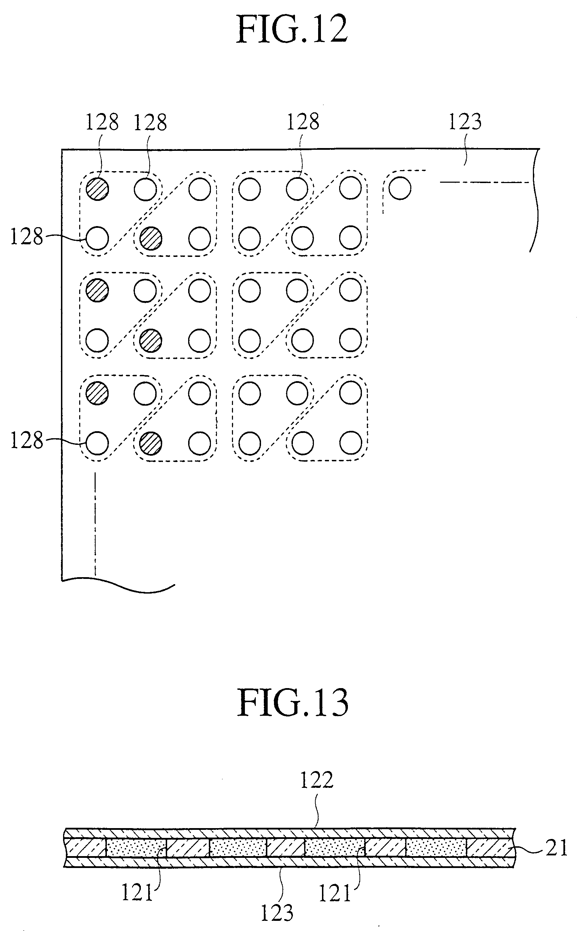

Secondly, as shown in Fig. 12 three storage sections 120 (electrode layers 128) are grouped as one set, and one set of three storage sections 120 are filled with EA fluids, as described in the first embodiment and as will be described in detail later, having different colors from each other. More specifically, for example, of the three storage sections 120, the first storage section 120 is filled with an EA fluid colored in red, the second storage section 120 is charged with an EA fluid colored in blue, and the third storage section 120 contains an EA fluid colored in yellow. Fig. 13 shows a portion of the display device on which the EA fluids are packed in the storage section 120 covered with the upper and lower transparent substrates 122 and 123.

Although in Figs. 10 to 12 the separations between the storage sections 120 are illustrated to be relatively large, this is only for the purpose of clearly showing the electric wires 129, and in fact the separation therebetween may be approximately a maximum of several mm. According to the current thin-film transistor array substrate manufacturing technique, wirings with a width of several mm are readily available by means of the photolithography technique and film-formation technique. If the separations between the storage sections 120 can assume 1/several mm to several mm, several tens to 100 wiring lines can easily be formed therein. Accordingly, increasing the number of the storage sections 120 is possible to some degree. When a number of storage sections 120 having a dimension of several mm to several cm are formed in a state in which the separations therebetween are approximately 1 mm, it is possible to effectively use the substantial whole surface of the storage plate 121 as a fine display area.

Thus, as well as the foregoing first and second embodiments, the display becomes possible due to the energization to the transparent electrodes 127 and 128, and this embodiment allows display of characters and graphic patterns with dots, which can serve as any color display means for color televisions, personal computers and so on.

The structure of this color display device according to this embodiment is simple and its manufacturing cost is extremely lower than those of the conventional liquid crystal devices. For example, the cost of the EA fluid is below 1/10 of the cost of the liquid crystal material. In addition, the conventional liquid crystal display device requires various parts such as color filters and polarizing plates, while the display device according to this embodiment only requires a simple wiring circuit arrangement but not requiring electrical circuits related to the power supply, and hence can be realized at an extremely low manufacturing cost.

Fourth Embodiment

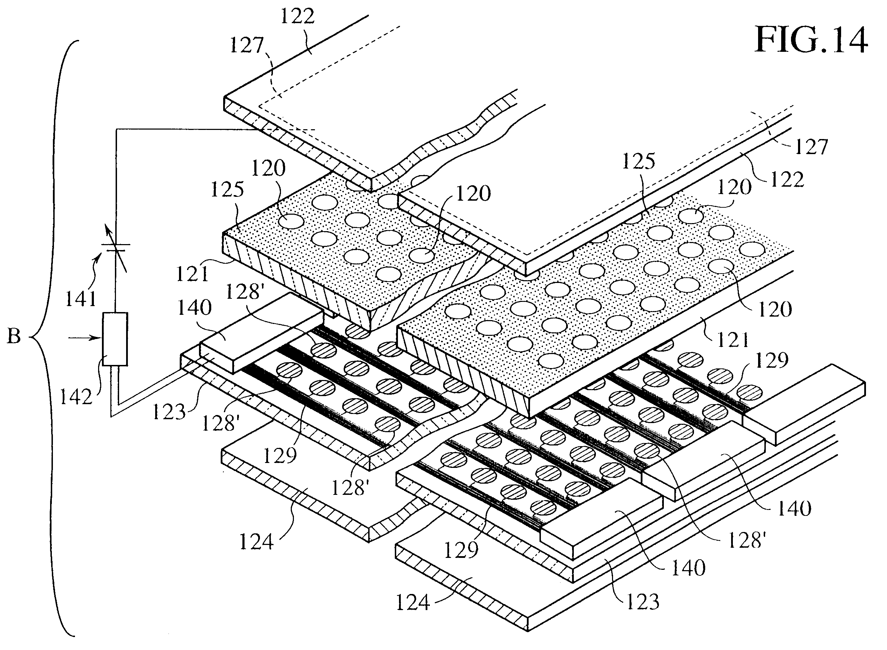

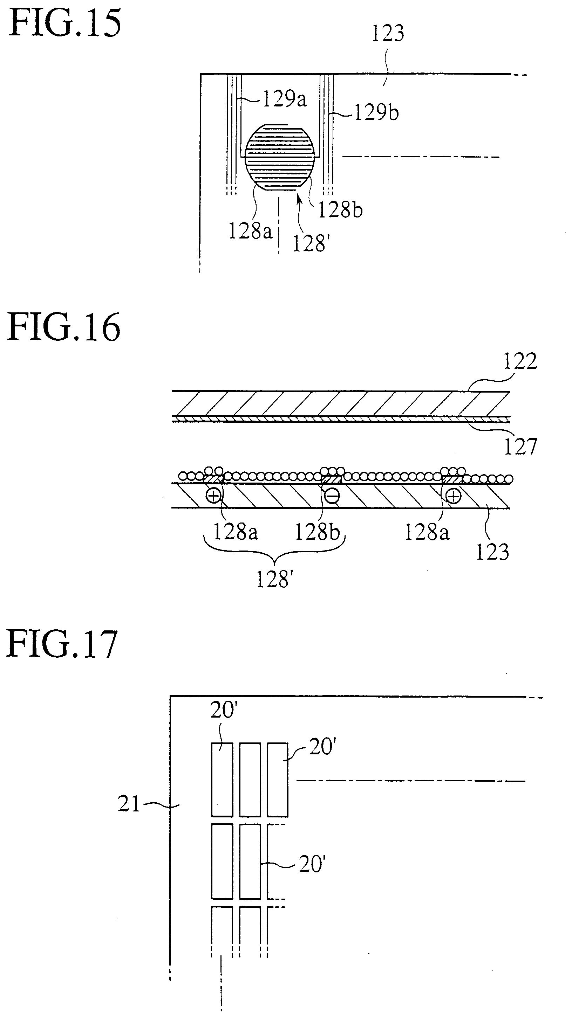

A description will be taken in conjunction with Figs. 14 and 15 in terms of a color display device, designated at character B, according to a fourth embodiment of this invention. In Fig. 14, this color display device B differs from the color display device A according to the foregoing third embodiment, in the configuration or structure of the transparent electrode layers (128) formed on the lower transparent substrate 123. Each of the transparent electrode layers 128', as shown in Fig. 15, comprises a first wholly circular comb-tooth-shaped line electrode layer 128a and a second wholly circular comb-tooth-shaped line electrode layer 128b so that the tooth portions of the first comb-tooth-shaped line electrode layers 128a are alternately inserted or placed in spaces between the tooth portions of the second comb-tooth-shaped line electrode layers 128b so as to wholly form a circular configuration. In addition, a wiring section 129a is connected with one line electrode layer 128a of each of the transparent electrode layer 128' and another wiring section 129b is connected with the other line electrode layer 128b of the same transparent electrode layer 128', both the writing sections 12a and 129b being led to the driving IC 140. Although in the illustration the line electrode layers 128a and 128b are combined such that their tooth portions are alternately engaged with each other to form an alternately inserted configuration, it is also possible to adopt a different configuration such as a spiral configuration, rectangular spiral configuration, coaxial configuration and a rectangular wave configuration in which the line electrode layers are partially disposed close to each other but not brought into contact with each other.

According to the color display device thus configured, the display can be accomplished by selectively making the energization between the transparent electrode layer 127 on the upper transparent substrate 122 and the line electrode layer 128a, 128b, or between the line electrode layers 128a and 128b, for which reason a higher-response display is possible as compared with the foregoing third embodiment. In the case where the energization is made between the line electrode layers 128a, 128b, as shown in Fig. 16 the EA particles are electro-aligned along the lower transparent substrate 123 surface.

Although in the illustration the storage section 128 (128') is shaped to has a substantially circular configuration, this invention is not limited to this configuration, but takes different configurations. For example, it is also appropriate that as shown in Fig. 17 rectangular storage sections 120' are formed in the storage plate 121. Even in this case, a similar color display is practicable.

Fifth Embodiment

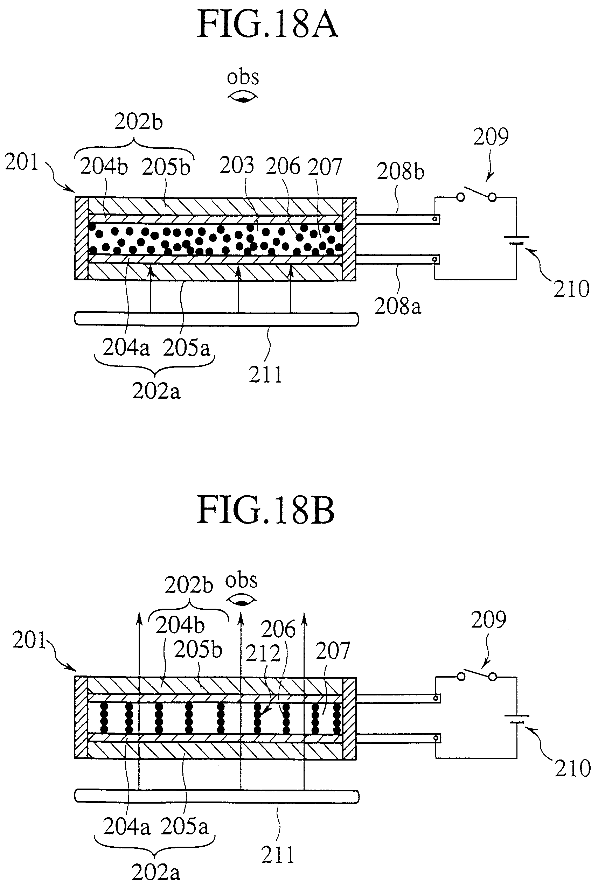

A description will be made hereinbelow in conjunction with Figs. 18A and 18B in terms of a color display device according to this invention. Fig. 18A is a cross-sectional view showing of a picture element of the color display device being in an zero-field state, and Fig. 18B is a cross-sectional view showing the same picture element of the color display device being in an electrified state. In Fig. 18A, the picture element, designated at numeral 201, is made up of a cell comprising two transparent electrode plates 202a, 202b which are disposed in opposed relation to each other. In addition, an EA fluid 203 colored in black is packed between the two transparent electrode plates 202a, 202b. The transparent electrode plate 202a is composed of a transparent electrode layer 204a and a transparent glass layer 205a formed in piles to make a laminated structure. The transparent electrode layer 204a is formed at the inner position of the cell to come into contact with the EA fluid 203, while the transparent glass layer 205a being formed at the outer position of the cell and colored in red (R). Similarly, the transparent electrode plate 202b is composed of a transparent electrode layer 204b and a colorless, transparent glass layer 205b. The transparent electrode layer 202b being formed at the inner position of the cell so as to come into contact with the EA fluid 203, whereas the transparent glass layer 205b being formed at the outer position of the cell. As described above in the first embodiment and as will be described later, the EA fluid 203 is produced by dispersing EA particles in an electrical insulating medium. In this embodiment, the EA particles 206 are colored in black and dispersed in the electrical insulating medium 207.

Electric wires 208a and 208b are drawn out from the electrode layers 204a and 204b, respectively, and further coupled to a switching circuit comprising a switch 209 and a power supply 210. In Fig. 18A, the switch 209 is in the open (OFF) state, and in Fig. 18B, it is in the closed (ON) state.

A back light 211 is disposed at the outside of the red electrode plate 202a. When the switch 9 is in the Off state, the black EA particles 206 randomly disperse in the EA fluid 203, with the result that, even if the back light 211 lightens, the light from the back light 211 is shielded, or shut out, by the EA particles 206 so as not to pass into the picture element 201 so that the picture element 201 has a black color, which is the color of the EA particles 206, when being viewed from the observer Obs side (transparent electrode plate 202b side). On the other hand, when the switch 209 turns into the ON state as shown in Fig. 18B, an electric field is established between the electrode layers 204a and 204b so that the EA particles 206, due to the EA effect, take the chain configurations 212 extending vertically and spaced from each other. As a result, the EA particles 206 are absent in the spaces between the chain configurations 212 so that only the electrical insulating medium 207 is present therein to allow the light from the back light 211 to be transmittable in the picture element 210.

At this time, the light from the back light 211 turns red because of passing through the red transparent electrode plate 202a. Since the electrical insulating medium 207 and the transparent electrode plate 202b are colorless, the light passing through the picture element 201 becomes red for the observer Obs. Accordingly, this display element 201 turns red in response to the ON state of the switch 209. If the switch 209 return to the original OFF state, the EA particles 206 again take the randomly dispersing state so as to cut off the light from the back light 211, with the result that the display element 201 lights out and appears to be black in color. Thus, the display device comprising this display element 201 repeatedly and alternately takes the lighting (red light transmission) and light-out states in accordance with the application and non-application of an electric field thereto, and hence, is suitable for display equipment such as a danger message warning device.

Sixth Embodiment

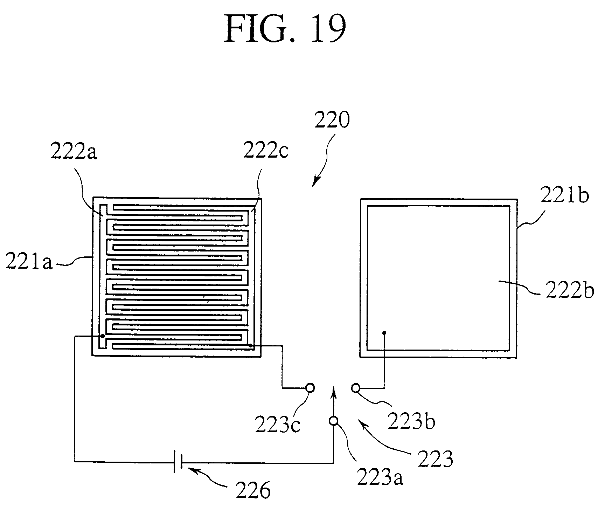

A description will be taken in conjunction with Fig. 19 in terms of a color display device according to a sixth embodiment of this invention. The sixth embodiment is basically the same as the foregoing fifth embodiment except for the structures of the transparent electrode plates and the arrangement of electric circuit. Accordingly, the description will mainly be made about the different portions. In Fig. 19, one transparent electrode plate 221a of a picture element 220 includes a comb-like transparent electrode layer 222a (which will be referred hereinafter to as a first electrode layer 222a) and another comb-like transparent electrode layer 222c (which will be referred hereinafter to as a second electrode layer 222c), the tooth portions of the first electrode layer 222a being alternately inserted or placed in spaces or gaps between the tooth portions of the second electrode layer 222c without being brought into contact therewith. On the other hand, the other transparent electrode plate 221b has wholly an electrode layer 222b (which will be referred hereinafter to as a facing electrode 222b). The transparent electrode plate 221a (transparent glass layer) is colored in red and the other transparent plate 221b (transparent glass layer) is colorless.

The arrangement of the electric circuit for this picture element 220 is as follows. That is, the second electrode layer 222c of the red transparent electrode plate 221a is connected with one fixed contact 223c of a change-over switch 223, while the facing electrode layer 222b of the other transparent electrode plate 221b is connected with the other fixed contact 223b of the same change-over switch 223. A movable contact 223a of the change-over switch 223 comes into connection with the negative (-) side of a power supply 226. Further, the first electrode layer 222a of the transparent electrode plate 221a takes connecting relation to the positive (+) side of the same power supply 226. That is, in accordance with the switching operation of the change-over switch 223, this electric circuit causes application of an electric field between the first and second electrode layers 222a and 222c, or to between the first electrode layer 222a and the facing electrode layer 222b.

This display element 220 operates as follows in accordance with the switching operation of the switching circuit. First of all, when the change-over switch 223 is at the facing electrode layer 222b side, an electric field takes place between the first electrode layer 222a and the facing electrode layer 222b, with the result that the EA fluid present therebetween is electro-aligned to vertically form chain configurations between the transparent electrode plates 221a and 221b so that the illumination light from a back light (227) can pass through this display element 220 which in turn, has a red color.

Secondly, when the change-over switch 223 is switched to the second electrode layer 222c side, an electric field appears between the first electrode layer 222a and the second electrode layer 222c. At this time, the EA particles 206 cancels the vertically arranged chain configurations between the transparent electrode plates 2221a, 2221b, and newly form chain configurations 225 between the first and second electrode layers 222a, 222c along a direction parallel to the transparent electrode plate 221a so as to cover the transparent electrode plate 221a. As a result, the illumination light from the back light 227 is shielded so that the display element 220 lights out.

As described above, the EA particles 206 of this display element 220 are response to the switching operation of the change-over switch 223 to quickly take the vertical chain configuration state or the horizontal configuration state relative to the transparent electrode plates 221a, 221b, i.e., the lightening state or light-out state, thus providing a color display device with an excellent response to an electric field.

In this embodiment, the polarities of the first and second electrode layers 222a, 222c and the facing electrode layer 222b are also allowed to be reversed. In addition, although the patterns of the first and second electrode layers 222a, 222c are formed to have comb-like configurations, it is also appropriate to take other configurations such as spiral configurations and branch-like configurations if being two or more transparent electrode layers disposed so as not to come into contact with each other. Moreover, the switching circuit is not limited to the illustration, but can freely employ various arrangements.

Seventh Embodiment

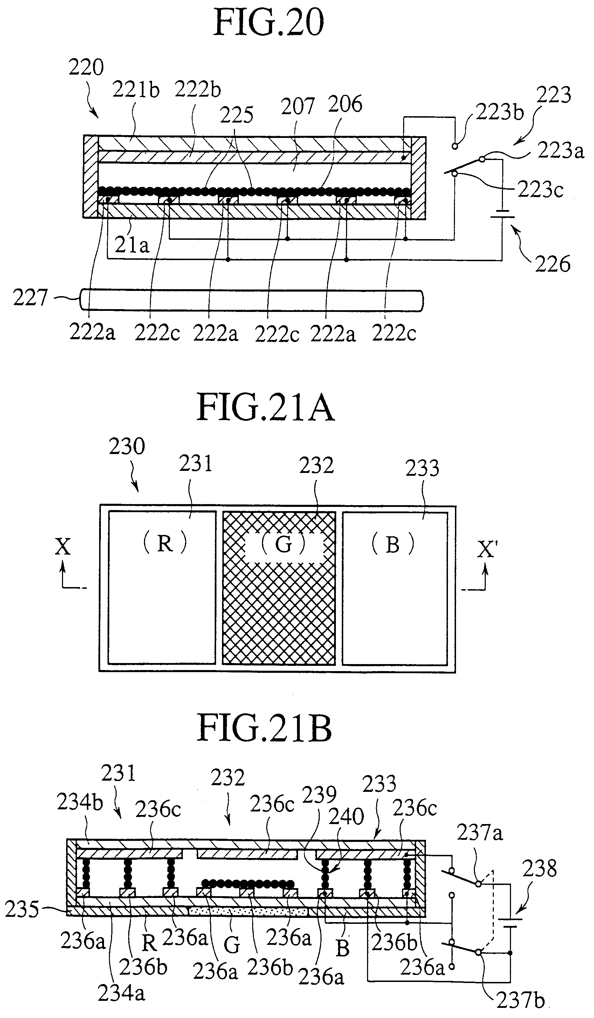

A description will be made with reference to Figs. 21A and 21B in terms of a color display device according to a seventh embodiment of this invention. As shown in Fig. 21A this color display device is made up of a picture element unit 230 comprising a number of (three in the illustration) picture elements 231, 232, 233 disposed and arranged successively on the same plane to be adjacent to each other and constructed integrally. Each of the picture elements 231, 232, 233 basically has the same structure as that in the foregoing sixth embodiment, except that color filters 235 colored in red (R), green (G) and blue (B) are adhered onto one transparent electrode plate 234a (which may be structured integrally) of the picture elements 231, 232 and 233, respectively, by which color filters 235 the transparent electrode plates 234a of the picture elements 231, 232, and 233 have different red (R), green (G) and blue (B) colors, respectively. Each of the transparent electrode plates 234a equipped with the color filter 235 has, on its inner surface, a first comb-like transparent electrode 236a and a second comb-like transparent electrode 236b, the tooth portions of which are alternately engaged with each other as well as in the sixth embodiment. On the other hand, each of the other transparent electrode plates 234b (which can be constructed integrally) has a facing electrode layer 236c individually formed for each of the picture elements 231, 232 and 233. This transparent electrode plate 234b is colorless.

The picture elements 231, 232 and 233 are individually provided with switching circuits, respectively. Fig. 21A is a cross-sectional view taken along line X-X' of Fig. 21A. In Fig. 21B, only a switching circuit for the picture element 233 is illustrated for brevity. The other picture elements 231 and 232 have a similar switching circuit. Referring to Fig. 21B, the switching circuit for the picture element 233 includes change-over switches 237a and 237b, linked with each other, and a power supply 238. The change-over switch 237a is, at its movable contact (terminal), connected with the positive (+) side of the power supply 238 so that the positive (+) potential is selectively supplied to the facing electrode layer 236c and the first electrode layer 236a. In addition, the change-over switch 237b is linked with another change-over switch 237a, and while the change-over switch 237a causes the potential to be applied to the facing electrode layer 236c, the first and second electrode layers 236a and 236b come into connection with each other. When the potential is supplied through the change-over switch 237a to the first electrode layer 236a, the change-over switch 237b cuts off the connection between the first and second electrode layers 236a and 236b. The second electrode layer 236b and the movable contact of the change-over switch 237b are in connecting relation to the negative (-) side of the power supply 238.

Now, assuming that in the picture element 233 the change-over switch 237a supplies the positive (+) potential to the facing electrode layer 236c as shown in Fig. 21B, the first and second electrode layers 236a and 236b is in coupling relation to each other and exposed to the negative (-) potential, with the result that the black EA particles 239 in the cell form the vertical chain configurations 240 between the transparent electrode plates 234a and 234b. Accordingly, the light from a back light (not shown) located at the color filter 235 side passes through the blue (B) color filter portion and further passes into the picture element 233, which makes the picture element 233 blue in color. Similarly, the picture element 231 (R) turns red in the same switching mode.

Although the switching circuit for the picture element 232 (G) is not illustrated, the arrangement thereof is similar to that of the illustrated switching circuit for the picture element 233. That is, when in the picture element 232 (G) the change-over switch 237a is switched to the first electrode layer 236a side, the positive (+) potential is applied to the first electrode layer 236a, while the electric field disappears with respect to the facing electrode layer 236c. Meanwhile, the change-over switch 237b cuts off the connection between the first and second electrode layers 236a and 236b, and hence the negative (-) potential is supplied only to the second electrode layer 236b. Accordingly, the electric field occurs between the first and second electrode layers 236a and 236b, with the result that the EA particles 239 form the chain configurations 240 therebetween to shut out light so that the picture element 232 gets into the light-out state.

If the picture element unit 230 is observed at a distance in a state with having the aforesaid switching conditions, the red fight from the picture element 231 is mixed with the blue light from the picture element 233, with the result that the light from the picture element unit 230 appears to be pink in color. With combinations of the fighting and light-out of the three picture elements 231, 232 and 233, the picture element unit 230 can show 8 colors including white taken when all the three picture elements 231, 232 and 233 are in the lighting states and black taken when all the three picture elements 231, 232 and 233 are in the fight-out states. Accordingly, the display device according to this embodiment, having a number of picture element units, can serve as a full-color display device.

In this embodiment, in order to prevent the color-mixture and improve the light-dark contrast, it is desirable that a black matrix be provided around each of the picture elements 231, 232 and 233. In addition, for avoiding the influence on the EA particles of the adjacent picture element, it is appropriate that partitions are added to between the picture elements 231, 232 and 233.

Moreover, if in this picture element unit 230 a means to change the strength of the electric field to the respective electrode layers is fitted in the aforementioned switching circuit, the transmission fight intensity is individually controllable at every picture element. This arrangement permits the graduation of each picture element to be continuously or digitally changeable, and consequently, the picture unit 230 can express more colors.

The picture elements of the picture element unit 230 can freely take various arrangement patterns, and the screen of each picture element is not limited to the rectangular configuration, but taking desired, different configurations such as square, circle, triangle and hexagon. In addition, the picture element unit can employ different three-color combinations and combinations of two, or four or more colors.

Eighth Embodiment

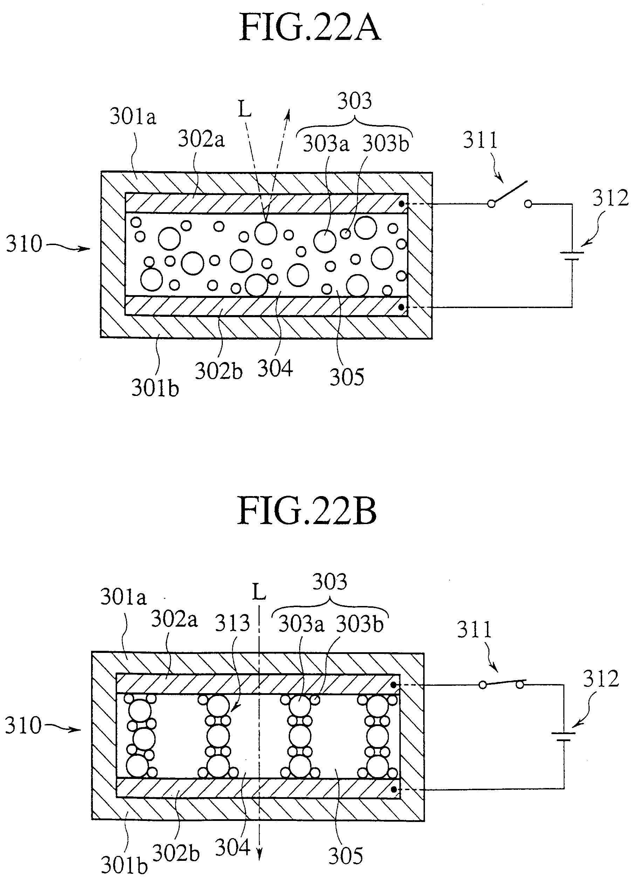

A description will be taken in conjunction with Figs. 22A and 22B in terms of a color display device according to an eighth embodiment of this invention. This color display device is composed of a plurality of or a number of picture elements arranged vertically and horizontally to form a matrix-like configuration so that one surfaces of picture elements make up a display surface. Figs. 22A and 22B are cross-sectional views showing one picture element of the color display device. This picture element is composed of a cell 310 including transparent substrates 301a and 301b disposed in opposed relation to each other. A transparent reference electrode 302a is formed on one transparent substrate 301a and a transparent facing electrode 302b is formed on the other transparent substrate 301b. These reference electrode 302a and the facing electrode 302b are connected to a switch 311 and a power supply 312 which are for establishing and cutting off an electric field therebetween. As well as in the foregoing embodiments, an EA fluid 305 produced by dispersing EA particles 303 in an electrical insulating medium (dimethyl silicone oil) 304 is packed between the reference electrode 302a and the facing electrode 302b. In this embodiment, the EA particles 303 are composed of two kinds of EA particles, i.e., classified into a first group comprising EA particles 303a with a relatively large diameter and a second group comprising EA particles 303b with a relatively small diameter.

The operation of this picture element is as follows. When the switch 311 is in the open (OFF) state as shown in Fig. 22A, the blue EA particles 303 randomly disperse in the EA fluid 305, and therefore the transparent surface (301a) of the cell 310 reflects blue fight as a whole, with the result that this picture element appears to be blue in color. Meanwhile, when the switch 311 gets into the closed (ON) state as shown in Fig. 22B, the EA particles 303 is responsive to the generated electric field to exhibit the EA effect, thus resulting in forming chain configurations 313 vertically electro-aligned between the reference and facing electrodes 302a and 302b. Accordingly, the EA particles 303 but the electrical insulating medium 304 are not present in the spaces between the chain configurations 313, thereby allowing the light incident at right angles onto the transparent surface 301a to pass into the cell 310. Consequently, the blue fight disappears.

At this time, the larger-diameter EA particles 303a move in the electrical insulating medium 304 at relatively high speed and are electro-aligned between the reference and facing electrodes 302a and 302b, for which reason the response speed of the cell 310 (the time taken until the cell 310 becomes transparent) to the closing operation of the switch 311 increases. On the other hand, at the time of no application of an electric field to the gap between the reference and facing electrodes 302a and 302b, the smaller-diameter EA particles 303b finely and randomly disperse in the electrical insulating medium 304, thus improving the opaque property. That is, this display element can quickly carry out the variation between the transparent state and the opaque state with an excellent contrast in response to application and non-application of an electric field thereto.

In the color display device comprising a plurality of display elements, each having the above-described cell structure, arranged to form a matrix-like configuration, electric fields are individually applied to the plurality of cells, with the result that transparent display elements and opaque display elements are made to create an image. This display device serves as a transmission type display device when the image is observed through the transmission light, whereas the display device acts as a reflector type display device when an opaque plate is placed at the rear side of the display device and the image is observed through the reflection light. In the case of being of the reflector type, it is desirable that the opaque plate and the EA particles are made to have different colors. As a result, the picture element shows the color due to the reflected light from the EA particles at the time of no application of an electric field thereto, while it shows the color due to the reflected light from the opaque plate at the time of application of an electric field thereto. Accordingly, the display element can exhibit different colors in accordance with the application and non-application of an electric field thereto. This opaque plate can be incorporated as a facing surface into the cell.

Furthermore, in this embodiment, the one transparent electrodes of the cells can also be made to produce a graphic pattern on the display surface. In this case, only the transparent electrode portions turn transparent in response to application of an electric field. Accordingly, if the rear side of the cell is made as an opaque plate, a single cell functions as a reflector type display device. In addition, as well as in the foregoing first embodiment, this embodiment can take a laminated structure so that the display element can show a plurality of colors.

### Ninth Embodiment

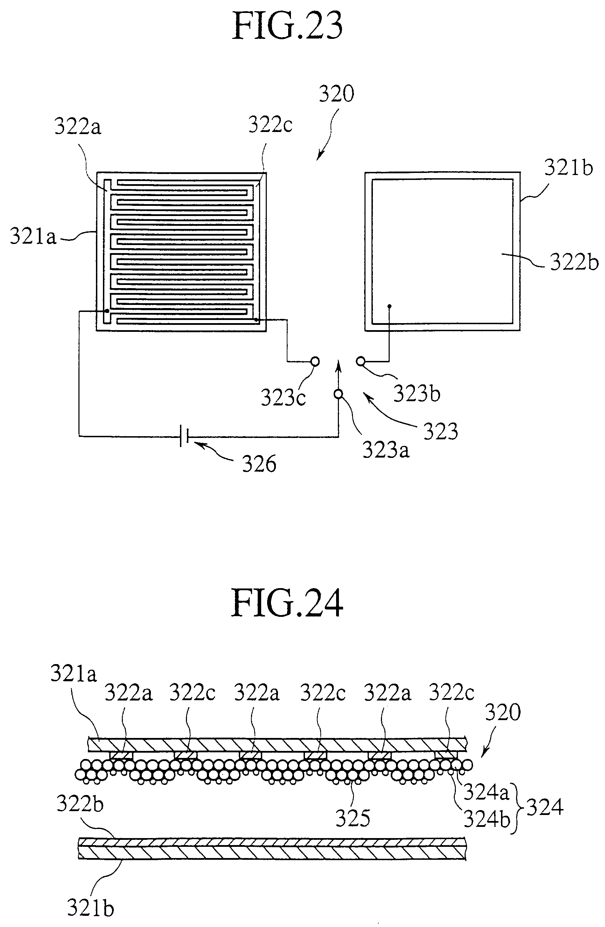

A description will be taken in conjunction with Figs. 23 and 24 in terms of a color display device according to an ninth embodiment of this invention. The difference of this embodiment from the foregoing eighth embodiment is the structure of electrodes and the arrangement of an electric circuit. Accordingly, the description will mainly be made in terms of the electrode structure and the circuit arrangement. The electrode structure and the circuit arrangement of the picture element of this embodiment are similar to those of the foregoing sixth embodiment. That is, in Fig. 23, on one transparent substrate 321a there are formed a comb-like transparent reference electrode 322a and another comb-like transparent adjacent electrode 322c. The tooth portions of the reference electrode 322a are alternately placed or inserted in spaces between the tooth portions of the adjacent electrode 322c. Meanwhile, a facing electrode 322b is wholly formed on the other transparent substrate 321b.

The adjacent electrode 322c on the transparent substrate 321a is connected with one fixed contact 323c of a change-over switch 323, while the facing electrode 322b on the other transparent substrate 321b is connected to the other fixed contact 323b of the same change-over switch 323. The movable contact 232a of the change-over switch 323 is coupled, for example, to the negative (-) side of a power supply 326. On the other hand, the reference electrode 322a on the transparent substrate 321a is in coupling relation to the positive (+) side of the same power supply 326. That is, this electric circuit can selectively apply an electric field between the reference electrode 322a and the adjacent electrode 322c, or between the reference electrode 322a and the facing electrode 322b in accordance with the switching operation of the change-over switch 323.

The cell 320 operates as follows by means of the electric circuit. That is, when the change-over switch 323 is switched to the facing electrode 322b side, an electric field is established between the reference electrode 322a and the facing electrode 322b. Accordingly, the EA particles 324 of the EA fluid existing therebetween are electro-aligned so as to form chain configurations arranged vertically relative to the transparent substrate 321a, with the result that the cell 320 becomes transparent. At this time, since the EA particles 324 include two kinds of EA particles 324a and 324b different in diameter from each other, the formation of the vertical chain configurations can quickly be accomplished.

Subsequently, when the change-over switch 323 is switched to the adjacent electrode 322c side, an electric field takes place between the reference electrode 322a and the adjacent electrode 322c. in this case, as shown in Fig. 24 the EA particles 324 comprising the EA particles 324a and 324b are electro-aligned between the reference electrode 322a and the adjacent electrode 322c irrespective of the difference in diameter, which makes chain configurations 325 parallel to the transparent substrate 321a so as to cover the transparent substrate 321a. As a result, the cell 320 gets into the light-transmission inhibiting state and becomes blue and opaque due to the irregular reflection on the EA particles 324. Similarly, since the EA particles 324 includes EA particles 324a and 324b different in diameter, the formation of the chain configurations 325 parallel to the transparent substrate 321a can quickly be accomplished, thus improving the speed of the response to the electric field. That is, the display device according to this embodiment can achieve the variation between the transparent state and the opaque state with an excellent electric field responsibility in accordance with the switching operation of the change-over switch 323.

In this embodiment, the reference electrode 322a, adjacent electrode 322c and facing electrode 322b can also take the opposite polarities, respectively. In addition, the reference electrode 322a and the adjacent electrode 322c can also have patterns such as spiral patterns and branch-like patterns other than the comb-like patterns as illustrated as long as being formed to be adjacent to each other.

### Tenth Embodiment

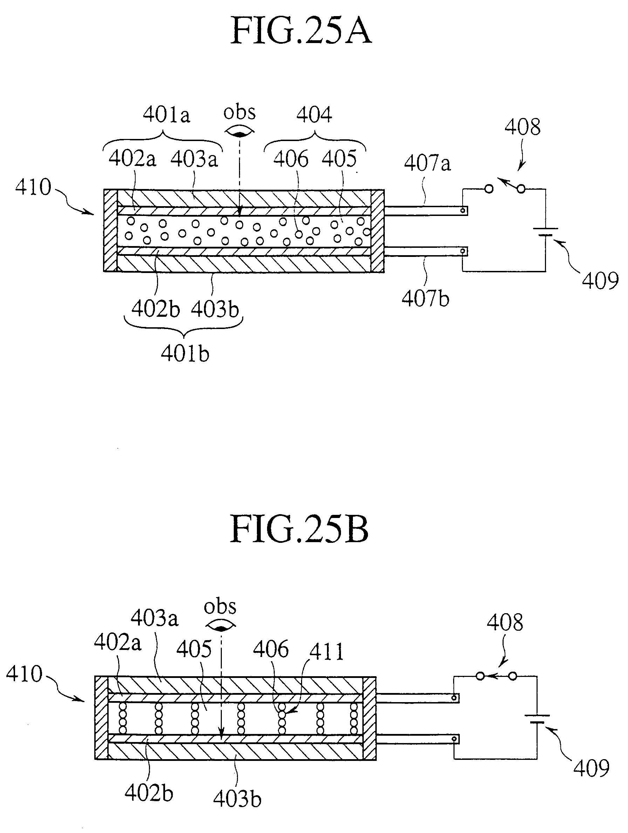

A description will be made hereinbelow with reference to Figs. 25A and 25B in terms of a color display device according to tenth embodiment of this invention. The color display device has a picture element (cell) 410 as shown in Figs. 25A and 25B. in Fig. 25A, the picture element 410 includes two electrode plates 410a, 401b disposed in opposed relation to each other, one electrode plate 410a being a transparent plate and serving as a display face and the other electrode plate 401b being a black opaque plate and acting as a back face. Similarly, an EA fluid 404 is provided between these two electrode plates 401a and 401b. As well as the EA fluids in the foregoing embodiments, this EA fluid 404 is produced by dispersing (yellow) EA particles 406 in a (transparent) electrical insulating medium (dimethyl silicone oil) 405. The transparent electrode plate 401a comprises a colorless, transparent glass plate 403a placed at the outside and a transparent electrode layer 402a located at the inside to come into contact with the EA fluid 404. On the other hand, the opaque electrode plate 401b comprises a black opaque resin plate 403b placed at the outside and a transparent electrode layer 402b located at the inside to come into contact with the EA fluid 404.

Electric wires 407a and 407b are drawn out from these electrode layers 402a and 402b, before led to a switching circuit comprising a switch 408 and a power supply 409. In Fig. 25A, the switch 408 is in the OFF (open) state. When the switch 408 is in the OFF state, the yellow EA particles 406 randomly disperse in the EA fluid 404, which causes yellow being the color of the EA particles 406 to appear when being viewed from the observer Obs side. On the other hand, if the switch 408 turns into the ON (closed) state so that an electric field is established between both the electrode layers 402a and 402b, as shown in Fig. 25B the EA particles 406 are vertically aligned between the electrode layers 402a and 402b due to the EA effect taken the electric field, thus resulting in forming chain configurations 411 spaced from each other. Accordingly, the EA particles 406 do not exist in the spaces between the chain configurations 411, but only the colorless and transparent electrical insulating medium 405 is present therein, with the result that the black color of the opaque plate 403b appears through the color less glass plate 403a and the colorless transparent electrical insulating medium 405 when being viewed from the observer Obs side. In other words, the picture element 410 changes in color from yellow to black in response to the switch 408 turning into the ON state.

Furthermore, when the switch 408 returns to the OFF state, the EA particles 406 again take the randomly dispersed state so that the EA fluid 404 becomes opaque, with the result that the picture element 410 reversibly varies from black to yellow. Thus, the display surface of the color display device according to this embodiment, including the above-mentioned picture element 410, takes the repeated variation between yellow and black in color in accordance with the application or non-application of an electric field. This color display device may be applicable particularly, but not exclusively, to various caution-signal display devices.

Eleventh Embodiment

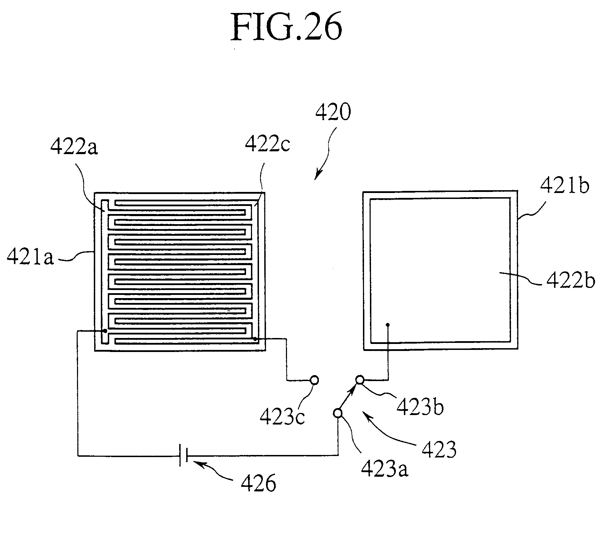

An eleventh embodiment of this invention will be described hereinbelow with reference to Fig. 26. The difference of this embodiment from the foregoing tenth embodiment is the structure of the electrode plates and the arrangement of the electric circuit. For this reason, the description will mainly be made of the electrode plate structure and the electric circuit arrangement. The electrode structure and circuit arrangement of the picture element of this embodiment are similar to those of the foregoing sixth embodiment. That is, in Fig. 26, this picture element 420 two electrode plates, one electrode plate serving as a display surface comprising a transparent substrate 421a and first and second comb-like electrode layers (first and second electrode layers( 422a and 422c formed on the transparent substrate 421a. The tooth portions of the first electrode layer 422a are alternately inserted or placed in the spaces between the tooth portions of the second electrode layer 422c. On the other side, the other electrode plate composed of a colored opaque substrate 421b and a transparent electrode layer (facing electrode layer) 422b entirely formed on the colored opaque substrate 421b. The transparent substrate 421a is colorless and the opaque substrate 421b is colored in black.

The electric circuit for this picture element 420 is as follows. That is, the first electrode layer 422a on the transparent substrate 421a is, for example, in connecting relation to the positive (+) side of the power supply 426, while the second electrode layer 422c on the same transparent substrate 421a and the facing electrode layer 422b on the opaque substrate 421b are connected with the fixed contacts 323c. 423b of a change-over switch 423, respectively. The movable contact of the switch 423 comes into connection with the negative (-) side of the power supply 426. That is, this electric circuit permits selective application of an electric field to between the first and second electrode layers 422a, 422c or to between first electrode layer 422a and the facing electrode layer 422b in accordance with the switching operation of the switch 423.

In the operation of this display element 420, first of all, when the switch 423 is connected to the facing electrode layer 422b side, an electric field takes place between the first electrode layer 422a and the facing electrode layer 422b, with the result that the EA particles (406) of the EA fluid present therebetween takes the electro-aligned state so as to form vertical chain configurations therebetween, whereupon this display element 420 turns black being the color of the opaque substrate 421b when viewed from the display surface side.

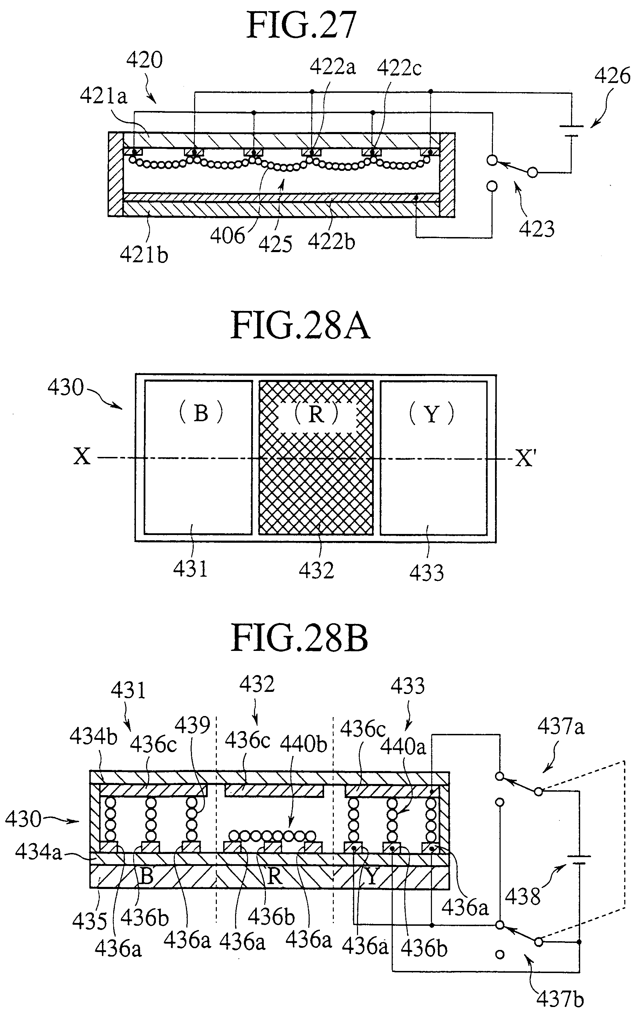

Secondly, when the switch 423 is switched to the second electrode layer 422c, an electric field is established between the first and second electrode layers 422a and 422c as shown in Fig. 27. In this case, the EA particles 406 varies from the previous vertical chain configurations formed between the first electrode layer 422a and the facing electrode layer 422b to chain configurations formed between the first and second electrode layers 422a, 422c to be parallel to the transparent substrate 421a to cover the substantial whole of the transparent substrate 421a. Accordingly, this display element 420 appears to be yellow, being the color of the EA particles 406, when viewed from the display surface side. Thus, this display element 420 quickly takes the variation between the vertical chain configuration state and the parallel chain configuration, i.e., color variation between yellow and black, in accordance with the switching operation of the switch 423, thus providing a display device with an excellent responsibility to an electric field.

In this embodiment, the polarities of the first and second electrode layers 422a, 422c and the facing electrode layer 422b can be reversed. The first and second electrode layers 422a, 422c are not limited to the comb-like patterns, but can take various patterns such as spiral configurations and branch-like configurations. In addition, it is also appropriate that the switching circuit has a different arrangement.

Twelfth Embodiment

A twelfth embodiment of this invention will be made hereinbelow in conjunction with Figs. 28A and 28B. The color display device according to this embodiment comprises a number of picture element units 430 on the same plane, each of which is illustrated in Figs. 28A and 28B. In Figs. 28A and 28B, one picture element unit 430 is composed of one cell (430) having two transparent substrates (plates) 434a and 434b disposed in opposed relation to each other. An EA fluid including EA particles 439 is packed between the two transparent substrates 434a and 434b. This cell 430 is classified into three picture elements 431, 432 and 433. That is, these three picture elements 531, 432 and 433 are designed to have, in common, the transparent substrates 434a, 434b and the EA fluid. Each of these picture elements 431, 432 and 433 has the same structure as the foregoing eleventh embodiment. Again speaking, each picture element has first and second comb-shaped electrode layers 436a and 436b on one transparent substrate so that the tooth portions of the first electrode layer 436a are alternately placed between the tooth portions of the second electrode layer 436b, and further has a facing electrode layer 436c on the other transparent substrate 434b. In addition, a color mosaic plate 435 having mosaically formed blue (B), red (R) and yellow (Y) color surfaces is adhered onto the transparent substrate 434a to match the respective picture elements 431 to 433, with the result that the transparent substrate 434a turns into a colored opaque plate.

The respective picture elements 431 to 433 separately have switching circuits. Although in Fig. 28B only the switching circuit for the picture element 433 is illustrated for simplicity, the other picture elements 431 and 432 have a similar switching circuit. In Fig. 28B, the switching circuit for the picture element 433 is equipped with change-over switches 437a and 437b operationally linked with each other. In the change-over switch 437a, its movable contact is, for example, in connecting relation to the positive (+) side of a power supply 438 to selectively apply the positive (+) potential to the facing electrode layer 436c or the first electrode layer 436a, whereas in the change-over switch 437b, its movable contact is connected with the negative (-) side of the power supply 438. The change-over switch 437b, linked with the change-over switch 437a, supplies the negative (-) potential to the first electrode layer 436a while the change-over switch 437a applies the positive (+) potential to the facing electrode layer 436c, and cuts off the supply of the negative (-) potential to the first electrode layer 436a. On the other side, the second electrode layer 436b is always in coupling relation to the negative (-) side of the power supply 438.

Now, let it be assumed that, in the picture element 433, the positive (+) potential is applied to the facing electrode layer 436c as shown in Fig. 28B. In this case, since both the first and second electrode layers 436a, 436b receive the negative (-) potential, the white EA particles 439 in the cell 430 form vertical chain configurations 440a between the transparent substrates 434a and 434b. Accordingly, the yellow section (Y) of the color mosaic plate 435 appears when being viewed from the display surface 434b side. Similarly, the picture element 431 (B) is colored in blue when the switching circuit takes the same switching mode. Furthermore, although not illustrated, a description will be made about the switching circuit for the picture element 432 (R) with reference to the switching circuit for the picture element 433. When the change-over switch 437a is switched to the first electrode layer 436a side, the positive (+) potential is supplied to the first electrode layer 436a, while the facing electrode layer 436c is released from the application of the electric field. On the other hand, the other change-over switch 437b gets into the breaking state, and hence the negative (-) potential is applied only to the second electrode layer 436b, with the result that an electric field is established between the first and second electrode layers 436a and 436b so that the EA particles 439 form chain configurations 440b therebetween to shut out the fight thereinto. Accordingly, in this picture element 432, the color, i.e., white, of the EA particles 439 appears.

When the picture element unit 430 taking the aforesaid switching states is observed at a distance, the blue of the picture element 431 and the yellow of the picture element 433 are mixed to create green color. Thus, with combinations of the switching operations for the three picture elements 431, 432 and 433, the picture element unit 430 can express six colors in addition to white and black, which permits the display device according to this embodiment to be used as a fill-color display device.

In this embodiment, it is preferable that partitions or the like are provided between the picture elements 431, 432 and 433 in order to avoid the electric alignment effect of the EA particles excessively range over the adjacent picture element. Moreover, if in this picture element unit 430 means to change the strength of the electric field to be applied to the electrode layers is incorporated into the aforementioned switching circuits, the color densities of the picture elements individually becomes controllable. In addition, in this case, the color of each picture element is continuously or gradually changeable so that the picture element 430 can express more colors. Still further, with the color mosaic plate 35 being replaced with a new one having different colors, the color expression can readily and freely be accomplished.

Although in the illustration the picture elements of the picture element unit 430 have rectangular shape, but each picture element is not limited to the rectangular configuration, but taking desired, different configurations such as square, circle, triangle and hexagon. In addition, the picture element unit 430 can freely take various arrangement patterns. Further, although in the illustration each picture element has a single-color opaque plate, this embodiment is not limited to this. For example, if a character or picture is drawn on the color mosaic plate 435 in each picture element, this display device also can be used as a display device to turn on and off the character or picture in accordance with the switching operations of the switches of the switching circuits.

Thirteenth Embodiment

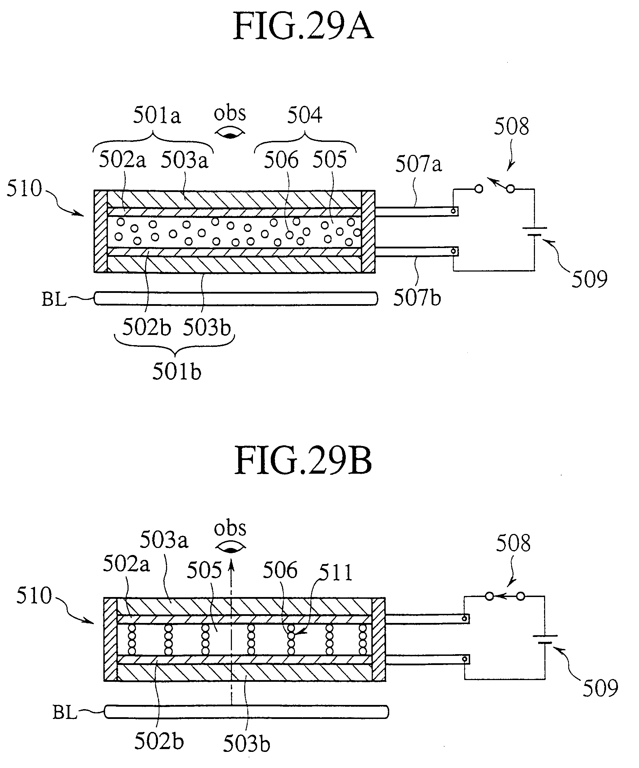

A thirteenth embodiment of this invention will be described hereinbelow in conjunction with Figs. 29A and 29B. A color display device according to this embodiment includes a picture element as shown in Figs. 29A and 29B. In Fig. 29A, this picture element, designated at numeral 510, is made up of a cell provided with two transparent electrode plates 501a and 501b disposed in opposed relation to each other, and includes an EA fluid 504 packed therebetween. One transparent electrode plate 501a comprises a transparent glass substrate 503a placed at the outside and a transparent electrode layer 502a located at the inside, while the other transparent electrode plate 501b comprises a transparent glass substrate 503b placed at the outside and a transparent electrode layer 502b. The EA fluid 504 is produced by dispersing blue-colored EA particles 506 into a yellow-colored transparent electrical insulating medium 505. Electric wires 507a and 507b are drawn out from the electrode layers 502a and 502b, respectively, and are connected with a switching circuit comprising a switch 508 and a power supply 509. In addition, a back light BL is placed at the transparent electrode plate 501b side of the cell 510.

When the switch 508 is in the OFF (open) state as shown in Fig. 29A, the blue EA particles 506 randomly disperse in the EA fluid 504 so that, even if the back light BL is in lighting state, the light from the back light BL is shut off by the EA particles 506 to inhibit the transmission of the light into the picture element 510. Accordingly, the picture element 510 appears to be greenish blue being the mixture of blue, i.e., the color of the EA particles 506, and yellow, i.e., the color of the electrical insulating medium 505, when being viewed from the observer obs side.

On the other side, when the switch 508 turns into the ON (closed) state, an electric field is applied to between the electrode layers 502a and 502b, as shown in Fig. 29B the EA particles 506 are vertically aligned between the electrode layers 502a, 502b due to the EA effect caused by the electric field, the resulting in formation of chain configurations 511. Consequently, the EA particles becomes absent in the spaces among the chain configurations 511 but only the yellow transparent electrical insulating medium 505 exists, with the result that the light from the back light BL can pass through the picture element 510. At this time, since the color of the electrical insulating medium 505 is yellow, the observer obs recognizes yellow light. In other words, this display element 510 turns yellow in response to the switch 508 being turned on when being viewed from the observer obs side.

When the switch 508 returns to the OFF state, the EA particles 506 returns to the randomly dispersing state to shut out the light from the back light BL so that the display element 510 turns off. If a light source is set at the observer obs side, the display element 510 turns into a greenish blue opaque state due to the color of the reflected light on the EA fluid 504. Thus, the display device according to this embodiment, having this picture element 510, repeatedly takes the variation between the yellow-colored state and the greenish blue-colored state in accordance with the ON and OFF of the electric field. For this reason, this color display device is applicable, but not exclusively, to a caution-signal display device.

Fourteenth Embodiment

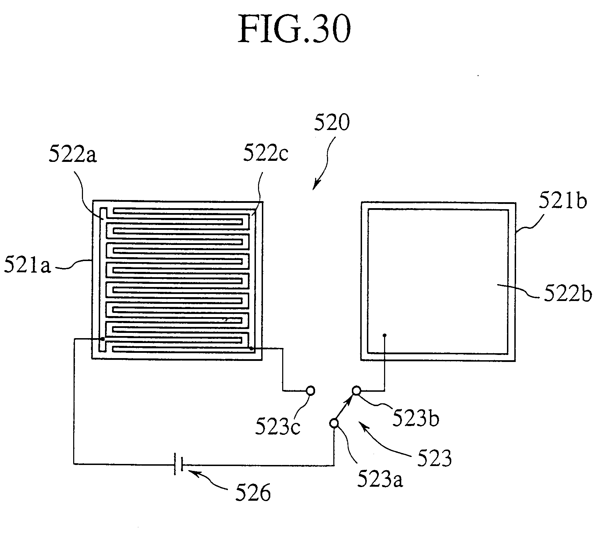

A description will be made hereinbelow in terms of a color display device according to a fourteenth embodiment of this invention. The difference of this embodiment from the foregoing thirteenth embodiment is the structures of transparent electrode plates and the arrangement of an electric circuit. The electrode structure and the circuit arrangement of the picture element of this embodiment are similar to those of the foregoing sixth embodiment. That is, in Fig. 30 one transparent electrode plate comprises a transparent substrate 521a and first and second comb-like transparent electrode layers 522a, 522c disposed so that the tooth portions of the first electrode layer 522a are alternately placed between the tooth portions of the second electrode layer 522c so as not to come into contact with each other. Further, the other transparent electrode plate is composed of a transparent substrate 521b and a facing electrode layer formed to wholly cover the transparent substrate 521b. Both the transparent substrates 521a and 521b are colorless. As well as the thirteenth embodiment, between both the transparent electrode plates there is packed an EA fluid (not shown) produced by dispersing blue-colored EA particles in a yellow-colored electrical insulating medium.

An electric circuit for this picture element 520 is made as follows. That is, the first electrode layer 522a is in connection with the positive (+) side of a power supply 526, while the second electrode layer 522c and the facing electrode layer 522b are connected with fixed contacts 523c and 523b of a change-over switch 523, respectively. Meanwhile, a movable contact 523a of the changeover switch 523 is in coupling relation to the negative (-) side of the power supply 526. This electric circuit can be made to selectively apply an electric field to between the first and second electrode layers 522a, 522c or between the first electrode layer 522a and the facing electrode layer 522b.

In operation, in response to connection of the change-over switch 523 to the facing electrode layer 522b side, an electric field is established between the first electrode layer 522a and the facing electrode layer 522b. The EA particles of the EA fluid interposed therebetween are electro-aligned between the transparent electrode plates to form vertical chain configurations, whereupon the illumination light from a back light (not shown) can pass into the display element 520 and the display element 520 becomes yellow for that the electrical insulating medium is colored in yellow. Secondly, if the change-over switch 523 is switched to the second electrode layer 522c, an electric field is applied to between the first and second electrode layers 522a and 522c. In this case, the vertical chain configurations destroy, whereas the EA particles 506 newly form chain configurations parallel to the transparent substrate 521a and between the first and second electrode layers 522a and 522c, which serve as shutters to cover the transparent substrate 521a so as to shut out the light from the back light BL. As a result, the display element 520 appears to be greenish blue which is the mixed color of blue of the EA particles 506 and yellow of the electrical insulating medium 505. Moreover, if the blending amount of the blue particles in the EA fluid is enough to cover the transparent substrate 521a, the display element 520 shows a blue color caused by the color of the EA particles 506, that is, takes a blue opaque surface state.

Accordingly, the display device according to this embodiment can quickly take the variation between the yellow-colored state and the greenish blue or blue opaque state in accordance with the switching operation of the change-over switch 523, thus providing a display system with an excellent responsibility to an electric field. The polarities of the first and second electrode layers 522a, 522c and the facing electrode layer 522b can be set to be reversed. In addition, the patterns of the first and second electrodes 522a and 522b are not limited to those as illustrated, but can take various shapes such as strip configurations, spiral configurations and branch-like configurations. Moreover, the circuit arrangement is not limited to that illustrated.

Fifteenth Embodiment

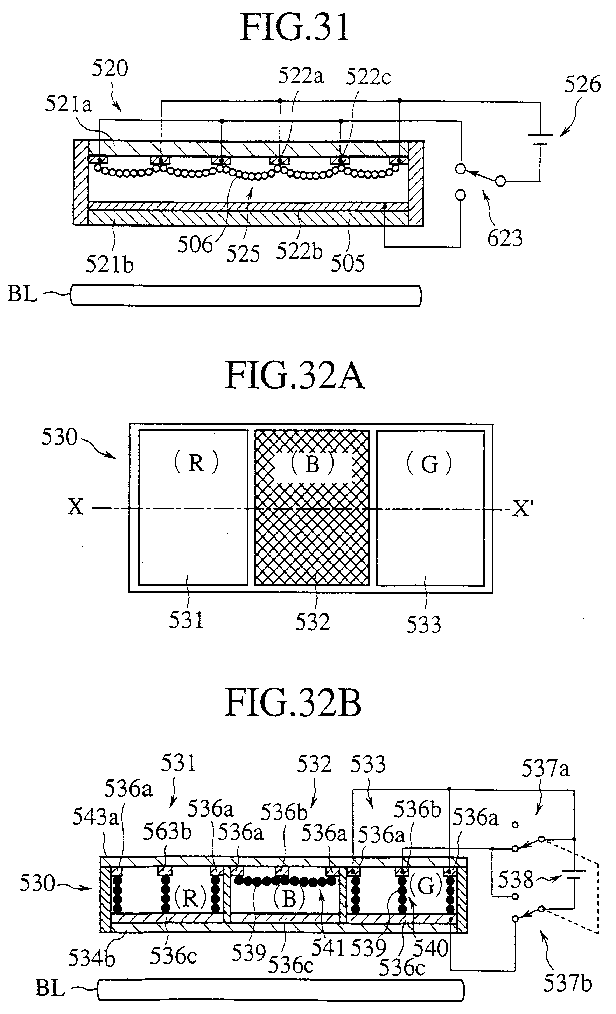

A fifteenth embodiment of this invention will be described in conjunction with Figs. 32A and 32b. The color display device according to this embodiment comprises a number of picture element units placed on the same plane, each being illustrated in Figs. 32A and 32B. Each picture element unit 530 is classified into three picture elements 531, 532 and 533 which are successively arranged on the same plane and each of which has the same electrode structure as that in the foregoing fourteenth embodiment. The electrical insulating media of the three picture elements 531 to 533 are colored in red (R), blue (B) and green (G), respectively. Further, all the EA particles in the three picture elements 531 to 533 are colored in black.

In each of the picture elements 531 to 533, as shown in Fig. 32B first and second comb-like transparent electrode layers 536a and 536b are formed on one transparent substrate 534a so that the tooth portions of the first electrode layer 536a are alternately placed between the tooth portions of the second electrode layer 536b so as not to come into contact with each other. On the other side, in each picture element, a facing electrode layer 536c is individually formed on the other transparent substrate 534b.

Each of the picture elements 531 to 533 has a separate switching circuit. In Fig. 32B the switching circuit for only the picture element 533 is illustrated for brevity, and the other picture elements 531 and 532 are equipped with similar switching circuits. The switching circuit for the picture element 533 has change-over switches 537a and 537b, operationally linked with each other, and a power supply 538. The first electrode layer 536a is always connected to the positive (+) side of the power supply 538. The change-over switch 537a is, at its movable contact, coupled to the positive (+) side of the power supply 538 so as to carry out the ON/OFF control of supply of the positive (+) potential to the second electrode layer 536b. On the other hand, the change-over switch 537b is, at its movable contact, connected with the negative (-) side of the power supply 538. The change-over switch 537b causes the negative (-) potential to be supplied to the facing electrode layer 536c while the change-over switch 537a supplies the positive (+) potential to the second electrode layer 536b, and causes the negative (-) potential to be applied to the second electrode layer 536b when the change-over switch 537a cuts off the supply of the potential to the second electrode layer 536b.

Now, assuming that in the picture element 533 the change-over switch 537a takes a position to supply the positive (+) potential to the second electrode layer 536b as shown in Fig. 32B, the negative (-) potential is applied to the facing electrode layer 536c, with the result that the black EA particles 539 in the cell form vertical chain configurations 540 between the first electrode layer 536a and the facing electrode layer 536c and further between the second electrode layer 536b and the facing electrode layer 536c. Accordingly, the light from a back light BL disposed at the transparent substrate 534b side passes through the picture element 533 so that the color, i.e., green, of the electrical insulating medium appears. Similarly, the picture element 531 turns red when taking the same switching mode.

Furthermore, although the switching circuit for the picture element 532 is not illustrated, a description will be made about the operation of the picture element 532 by using the switching circuit for the picture element 533. When the change-over switch 537a for the picture element 532 is switched to cut off the supply of the positive (+) potential to the second electrode layer 536b, the negative (-) potential is applied through the change-over switch 537b to the second electrode layer 536b, with the result that the facing electrode layer 536c is released from the electric field. Whereupon, an electric field takes place between the first and second electrode layers 536a and 536b so that the EA particles 539 form chain configurations 541 therebetween so as to shut off the fight incident thereon. Accordingly, the picture element 532 takes the light-out state, i.e., turns black.

While the picture elements 531 to 532 are in the above-mentioned switching states, when the picture element unit 530 is seen at a distance, the red light from the picture element 531 and the green light from the picture element 533 are mixed with each other to become yellow. Thus, with the combinations of the light colors of the picture elements 531 to 533, this picture element unit 530 can express eight colors including white taken when all the picture elements 531 to 533 take the lighting states and black taken when all the picture elements 531 to 533 take the light-out states. The display device according to this embodiment, including a number of such picture element units 530, can acts as a full-color display device.

If in the picture element unit 530 means to change the strength of an electric field is built in each of the above-mentioned switching circuits, the transmitted light intensity is individually controllable at every picture element. Accordingly, the tone of each picture element is changeable continuously or gradually, and hence the picture element unit 530 can show more colors.

The picture elements 531 to 533 of the picture element unit 530 can freely take various arrangement patterns, and each picture element is not limited to the rectangular configuration, but taking desired, different configurations such as square, circle, triangle and hexagon. In addition, the picture element 530 unit can employ different three-color combinations and combinations of two, or four or more colors.

A detailed description will be made hereinbelow in terms of an EA fluid suitable for color display devices according to this invention. Basically, any EA fluid is usable for the color display device if including solid particles (EA particles) which can exhibit the EA effect and which are dispersed in an electrical insulating medium. Preferably, as shown in Fig. 2, each of the EA particles is an inorganic and organic composite particulate produced with a core body made up of a polymer compound and a surface layer including an inorganic matter (EA material), which exhibits the EA effect, and a pigment. Since the surface layer of each inorganic and organic composite particulate is made of the inorganic EA material, the EA particles wholly exhibit the EA effect. In addition, although the specific gravity of the in organic EA material is large, the core body is made of a polymer compound with a relatively small specific gravity, and hence the specific gravity of the EA particles can be made to be close to that of the electrical insulating medium, thus providing an EA fluid with an excellent dispersion.

Among the organic high-molecular weight compounds usable for the core bodies of the EA particles are polyacrylate, methacrylate, methacrylate-styrene copolymer, polystyrene, polyethylene, polypropylene, nitrile rubber, butyl rubber, ABS resin, nylon, polyvinyl butylate, ionomer, ethylene-vinyl acetate copolymer, vinyl acetate resin, polycarbonate resin and others, mixtures including one or more of these materials, or copolymers of these monomers or oligomers or copolymers with other monomers or oligomers.

It is also possible to use materials including functional groups such as hydroxyl group, carboxyl group and amino group. It is desirable to use such a functional group included organic high-molecular compound because it can improve the EA effect.

Furthermore, as the inorganic EA materials suitable for the surface layers of the inorganic and organic composite particles, there are electrical semiconductive inorganic matters, inorganic ion exchangers, silica gel, one of these materials metal-doped, and material in which one of these materials is used as an electrical semiconductive layer and formed on a different carrier.

For example, the preferable electrical semiconductive inorganic matters are as follows: (1) metal oxides such as $SnO_2$ and amorphous type titanium dioxide (produced by Idemitsu Sekiyu Kagaku Co., Ltd.); (2) metallic hydroxide such as titanium hydroxide and niobium hydroxide, the titanium hydroxide including hydrous titanium oxide (produced by Ishihara Sangyo Co., Ltd.), methatitanic acid (another name : b titanic acid, $TiO(OH)_2$, and orthotitanic acid (another name : a titanic acid, $Ti(OH)_4$); and (3) hydroxides of metal oxides such as $FeO(OH)$ (gecite), and inorganic ion exchangers.

As examples of the inorganic ion exchangers, there are (1) dydroxides of polyvalent metals, (2) hydrotalcites, (3) acid salts of polyvalent metals, (4) hydroxyapatite, (5) nashicon-type compounds, (6) clay minerals, (7) potassium titanates, (8) heteropolyacid salts and (9) insoluble ferrocyanides.

A detailed description will be made hereinbelow in terms of these inorganic ion exchangers.

(1) hydroxides of polyvalent metals

These compounds are expressed with a general formula $MOx(OH)y$ (M designates a polyvalent metal, x represents a number above 0, and y denotes a positive number). For example, among the dydroxides of polyvalent metals are titanium hydroxides, zirconium hydroxides, bismuth hydroxides, tin hydroxides, lead hydroxides, aluminum hydroxides, tantalum hydroxides, niobium hydroxides, molybdenum hydroxides, magnesium hydroxides, manganese hydroxides, iron hydroxides and so on. For instance, the titanium hydroxides include hydrous titanium oxides (another name : metatitanic acid or b titanic acid, $TiO(OH)_2$) and titanium hydroxides (another name : orthotitanic acid or a titanic acid, $Ti(OD)_4$). This also applies to other compounds.

(2) hydrotalcites

These compounds are expressed with a general formula $M_{13}Al_6(OH)_{43}(CO)_3 \cdot 12H_2O$ (M depicts a bivalent metal). For example, a bivalent metal M is Mg, Ca, Ni or others.

(3) acid salts of polyvalent metals

These materials include titanium phosphates, zirconium phosphates, tin phosphates, cerium phosphates, chrome phosphates, zirconium arsenates, titanium arsenates, tin arsenates, cerium arsenates, titanium antimonates, tin antimonates, tantalum antimonates, niobium antimonates, zirconium tungstates, titanium vanadates, zirconium molybdates, titanium selenates, tin molybdates, and so on.

(4) hydroxyapatites

These materials include, for example, calcium apatites, lead apatites, strontium apatites, cadmium apatites, and so on.

(5) nashicon-type compounds

These materials include, for example, $(H_3O)Zr_2(PO_4)_3$. In this invention, it is also possible to use nashicon-type compounds in which $H_3O$ is substituted by Na.

(6) clay minerals

These materials are, for example, montmorillonites, sepiolites, bentonites, and other minerals. Of these, the sepiolite is particularly preferable.

(7) potassium titanates

These are expressed by general formula $aK_2O \cdot bTiO_2 \cdot nH_2O$ (a represents a positive number satisfying $0 < a \leq 1$, and b denotes a positive number satisfying $1 \leq b \leq 6$, and n depicts a positive number), for instance, including $K_2 \cdot TiO_2 \cdot 2H_2O$, $K_2O \cdot 2TiO_2 \cdot 2H_2O$, $0.5K_2O \cdot TiO_2 \cdot 2H_2O$, $K_2O \cdot 2.5TiO_2 \cdot 2H_2O$, and so on. Of these compounds, the compounds in which a or b is not integer can easily be produced with the compounds in which a or b is an integer being acidificated and K being substituted by H.

(8) heteropolyacid salts

These are expressed by general formula $H_3AE_{12}O_{40} \cdot nH_2O$ (A represents a phosphorus, arsenic, germanium, or silicon, and E denotes a molybdenum, tungsten, or vanadium, and n indicates a positive number), for example, including ammonium molybdophosphates, and ammonium tungstophosphates.

(9) insoluble ferrocyanides

These are expressed by a general formula $Mb-pxaA[E(CN)_6]$ where M represents an alkali metal or hydrogen ion, A designates a heavy metal ion such as lead, copper, nickel, cobalt, manganese, cadmium, iron (III) and titanium, E denotes iron (II), iron (III) cobalt or the like, b depicts 4 or 3, a indicates the valency of A, and p stands for a positive number of 0 to b/a, for example including insoluble ferrocyan compounds such as $Cs_2Zn[Fe(CN)_6]$ and $K_2Co[Fe(CN)_6]$.

The above-mentioned inorganic ion exchangers in (1) to (9) have an OH group, and include substitution type ion exchanges in which a portion or all the ions present in the ion exchange site of these inorganic ion exchangers are substituted by another ions. That is, if the aforesaid inorganic ion exchangers are expressed by $R-M^1$ ($M^1$ represents the ionic species in the ion exchange site), this invention includes a substitution type inorganic ion exchanger in which a portion or all of $M^1$ of $R-M^1$ is substituted by an ionic species $M^2$ different from the M1. That is,

$$xR-M^1 + yM^2 \rightarrow Rx-(M^2)y + xM^1$$

where x and y represent the valencies of ionic exchange species $M^2$ and $M^1$, respectively.

Depending upon the kind of the inorganic ion exchanger having an OH group, $M^1$ is generally $H^+$ in a case where the inorganic ion exchanger shows the cation exchangeability. In this case, $M^2$ can arbitrarily selected from metallic ions such as an alkali metal, alkaline earth metal, polyvalent typical metal, transition metal, and rare earth metal, other than

$H^+$. In the case that the inorganic ion exchanger having the OH group indicates anion exchangeability, $M^1$ is generally $OH^-$, and in this case, $M^2$ is arbitrarily selectable from all the anions other than $OH^-$ which include such as I, Cl, SCN, $NO_2$, Br, F, $CH_3COO$, $SO_4$, $CrO_4$, composite ions, and so on.

Moreover, in the inorganic ion exchangers in which, being once lost due to the high-temperature heating process, the OH group is again added through the water-submerged process or the like, the inorganic ion exchanger after the high-temperature heating processing is also one of the inorganic ion exchangers usable in this invention, for example, nashicon-type compounds such as the materials obtained by heating, at a high temperature (500 to 700°C), hydrotalcite and $HZr_2(PO_4)_3$ obtainable by heating $(H_3O)Zr_2(PO_4)_3$. One or a plurality of ones of these inorganic ion exchanges can be used as the surface layer. As the inorganic ion exchangers, hydroxides of polyvalent metals or acid salts of polyvalent metals are particularly preferable.

As the other inorganic EA materials suitable for the surface layers of the EA particles, there are metallic oxides, metallic hydroxides, hydroxides of metal oxides, inorganic ion exchangers, one of these materials metal-doped, one of these materials placed as the electrical semiconductive layer on another carrier regardless of metal doping, and so on, which have electric conductivity of $10^3\Omega^{-1}/cm$ to $10^{-11}\Omega^{-1}/cm$. The metal doping is used, for example, for improving the electrical conductivity. If the electrical conductivity exceeds $10^3\Omega^{-1}/cm$, an excessive current flows into the EA fluid, in addition to resulting in a large power consumption, the device may be heated. On the other hand, if being less than $10^{-11}\Omega^{-1}/cm$, the EA effect is unsatisfactory, thus making it difficult to obtain satisfactory results.

A further description will be made hereinbelow in terms of other inorganic EA materials. That is, there are:

(A) metallic oxides : for example, $SnO_2$, amorphous type titanium dioxides (produced by Idemitsu Sekiyu Kagaku Co. Ltd.);
(B) metallic hydroxides : for example, titanium hydroxides, niobium hydroxides. The titanium hydroxides includes hydrous titanium oxides (produced by Ishihara Sangyo Co., Ltd.), metatitanic acid (another name : b titanic acid, $TiO(OH)_2$) and orthotitanic acid (another name : a titanic acid, $Ti(OD)_4$);
(C) hydroxides of metal oxides : for example, FeO (OH) (gacite);
(D) hydroxides of polyvalent metals : the same compounds as the aforementioned (1);
(E) hydrotalcites : the same compounds as the aforesaid (2);
(F) acid salts of polyvalent metals : the same materials as the foregoing (3);
(G) hydroxyapatites : the same materials as the foregoing (4);
(H) nashicon-type compounds : the same materials as the aforementioned (5);
(I) clay minerals : the same materials as the aforementioned (6);
(J) potassium titanates : the same materials as the aforesaid (7);
(K) heteropolyacid salts : the same materials as the foregoing (8);
(L) insoluble ferrocyanides : the same materials as the foregoing (9);
(M) metal-doped inorganic EA materials : for improving the electric conductivity of the aforementioned (A) to (L), a metal such as antimony (Sb) is doped into an inorganic EA material, for example, antimony-doped tin oxides ($SnO_2$); and
(N) inorganic EA materials 32 placed as electrical semiconductive layers on other carriers : for example, among the carriers are inorganic particles made with titanium oxide, silica, alumina, silica-alumina or the like or organic high-molecular particles made with polyethylene, polypropylene or the like, and among the electrical semiconductive layer materials are antimony (Sb)-doped tin oxides.

The particles containing the inorganic EA material wholly become inorganic EA materials. The surface layer can simultaneously contain the two or more inorganic EA materials mentioned above.

For the electrical insulating medium of the EA fluid, all the materials which have been used for the electric alignment fluids can be employed. As examples, there are diphenyl chlorides, butyl sebacates, aromatic polycarbonate higher alcohol esters, halophenyl alkyl ethers, transformer oils, paraffin chlorides, fluorine-based oils, silicone-based oils, fluorosilicone-based oils and others, although any fluid and mixture are usable as long as being chemically stable and allowing the stable dispersion of the EA particles.

The inorganic and organic composite particles (EA particles) can be produced in various ways. As one example, there is a way in which the core body particles made of an inorganic and organic composite compound and the fine particles made of an inorganic EA material are carried by means of a jetstream to come into collision with each other. In this case, the inorganic fine EA particles run into the surfaces of the core body particles at a high speed, thus being fixed thereto to form the surface layers thereon. Another way is that the core body particles are treated to float in a gas and a solution containing the inorganic EA material is sprayed toward the floating core body particles. In this case, after being adhered thereonto, the solution is dried to form the surface layers.

For production of the EA particles, the core bodies and the surface layers are preferable to be formed simultaneously. In this method, while the monomer of the organic high-molecular compound for forming the core bodies is emulsion-polymerized, suspension-polymerized or dispersion-polymerized in a polymerization medium, the inorganic fine EA particles are add to the monomer or the polymerization medium. The polymerization medium is preferable to be water, while a mixture of water and a water soluble organic solvent, and organic lean-solvent are also usable. According to this method, the monomer is polymerized in the polymerization medium to form core body particles, and at the same time the inorganic fine EA particles are aligned on the surfaces of the core body particles so as to form surface layers on the surfaces thereof, thus coating the core body particles.

In producing the inorganic and organic composite particles by means of the emulsion polymerization or suspension polymerization, a combination of the hydrophobic property of the monomer and the hydrophilic property of the inorganic EA material allows most of the inorganic EA materials to be aligned on the surfaces of the core body particles. According to the simultaneous formation method for the core bodies and surface layers, the inorganic EA particles can strongly and finely be adhered onto the surfaces of the core body particles being made of a polymer compound, resulting in being firm inorganic and organic composite particles.

In this invention, the EA particles being used is not necessarily limited to spherical configurations, while, by means of the core body particulate adjusting emulsion polymerization or suspension polymerization, the resultant EA particles have substantially spherical configurations. If having the spherical configurations, as compared with other configurations it is advantageous in adjusting the transmitted light intensity because light can be scattered omnidirectionally.

Although the diameters of the EA particles is not particularly limited, they are preferable to be 0.1 to 500 mm, particularly 5 to 200 mm. Further, although the diameters of the inorganic EA particles 32 are not particularly limited, they are preferable to be 0.005 to 100 mm, more preferably 0.01 to 10 mm. Accordingly, the specific gravity of the EA particles is easily adjustable to be 1.1 to 1.2 which is substantially equal to that of the electrical insulating medium, thus allowing the uniform dispersion.

In the EA particles, the weight rate (%) of the inorganic EA material for formation of the surface layer and the organic high-molecular compound for formation of the core body is not particularly limited, while, for example, the weight rate of (inorganic EA material) : (organic high-molecular compound) is preferable to be in the range of (1 to 60) : (99 to 40), particularly preferable to be in the range of (4 to 30) : (96 to 70). If the weight rate of the inorganic EA material 32 is below 1%, the resultant EA fluid does not sufficiently show the EA effect. On the other side, if exceeding 60%, an excessive current gets to flow into the resultant EA fluid.

The specific gravity of the EA particles can relatively be made small as compared with the EA material for the formation of the surface layers, for that the organic high-molecular compound with a relatively small specific gravity can be used for the core bodies. The specific gravity of the EA particles is freely adjustable with the kinds and rates of the organic high-molecular compound and the inorganic EA material, while the specific gravity is generally set to be approximately 1.0 to 2.0 taking the electrical insulating medium to be used into consideration. If the difference in specific gravity between the EA particles and the electrical insulating medium is large, the EA particles can sink in the medium, which makes difficult the uniform dispersion.

The electrical insulating medium can be colored if required. When coloring it, it is desirable to use an oil soluble dye or dispersion dye which is of the type that is meltable in the selected electrical insulating medium and maintains the electrical characteristics. There is no problem even if a dispersing agent, surface active agent, viscosity controlling agent, antioxidant, stabilizer and so on are included in the electrical insulating medium.

The surface layers or core bodies of the EA particles can contain a coloring matter if required. The coloring matter usable for the surface layers is an ordinary pigment. It is desirable that the pigment is mixed into the inorganic EA material in forming the surface layers being made of inorganic EA material on the core bodies 31 in accordance with the foregoing method. If the inorganic EA material itself has a color, it is possible to determine the color of the inorganic and organic composite particles.

For giving the coloring matter into the core bodies, it is possible to use a pigment or dye known as the coloring matter for the synthetic resin. This coloring matter can be in advance mixed into the monomer for the formation of the core bodies before the monomer is polymerized, or can be put in the synthetic resin for the formation of the core bodies. For example, when a titanium hydroxide or silica gel is mixed thereinto, the EA fluid can be colored in white, and when a copper phthalocyanine blue (produced by Dainichi Seika Kogyo Co., Ltd., cyanine blue S-32) being a blue pigment is mixed thereinto, the EA fluid can be colored in blue, and when a first yellow (NL first yellow 5G(S), produced by Dainichi Seika Kogyo Co., Ltd.) being a yellow pigment is mixed thereinto, the EA fluid can be colored in yellow. In addition, when a black triiron tetraoxide ($Fe_3O_4$) being an electrical semiconductive inorganic matter is mixed thereinto, the EA fluid can be colored in black, and when a red diiron trioxide ($Fe_2O_3$) being an electrical semiconductive inorganic matter is mixed thereinto, the EA fluid can be colored in red.

Accordingly, with the inorganic and organic composite particulate including a coloring matter being dispersed in the electrical insulating medium which is transparent or approximately transparent and white in color, the color of the EA fluid is adjustable. That is, with the EA particles in which at least one of the surface layer and the core body contains the coloring matter, the scattering light from the resultant EA fluid at no application of voltage thereto can freely take various colors in accordance with the colors of the coloring matters.

In the EA particles produced in the above-mentioned various ways, particularly, produced in the method in which the core bodies and surface layers are simultaneously producible, a portion or whole of the surface layers is covered with an organic high-molecular matter or thin films of additives such as dispersants and emulsifiers used in producing processes, whereby there is the possibility that the EA effect of the inorganic EA material particles is unsatisfactorily shown. The films made of these inactive matters can easily be removed by polishing the surfaces of the particles.

The surface polishing of the EA particles can be achieved in various ways. For instance, the EA particles are dispersed in a dispersion medium such as water before stirred. In this case, it is also possible that abrasives such as sand particles and small balls are mixed into the dispersion medium and stirred together with EA particles, or that the stirring is carried out using grinding stones. Moreover, it is also appropriate that the EA particles are dry-stirred using the abrasives and grinding stones without being put in such a dispersion medium.

A more preferable polishing method is to stir the EA particles by means of a jetstream or the like. The particles violently come into collision with each other due to the jetstream. As preferable points, this method does not require abrasives, and can easily separate the inert materials peeled from the particulate surfaces in classification. In the case of the aforesaid jetstream stirring, although difficulty is experienced in some degree to determine the polishing conditions on the basis of the kind of the stirring apparatus, stirring speed, and the kind of the material of the inorganic and organic composite particles, it is generally desirable that, for example, the stirring speed is 6000 rpm and the stirring time is 5 to 15 minutes.

The EA fluid in this invention is producible with the EA particles and, it required, other components such as dispersants being stirred and uniformly mixed into the electrical insulating medium described above. Any kind of stirring machine is usable which is generally used in order to disperse solid particles in a liquid dispersion medium.

A description will be made hereinbelow in terms of the EA particulate concentration effective in this invention, and further the kinematic viscosity of the electrical insulating medium and the voltage being applied to the EA fluid.

The limitation is not particularly imposed on the concentration of the EA particles in the electrical insulating medium, while it is preferable to be 0.5% to 15% by weight. If the particulate concentration is less than 0.5% by weight, the transmitted light control effect is sufficiently unobtainable. When exceeding 15% by weight, the particulate density becomes excessively high, with the result that the transparency sensation and color variation are not sufficiently obtainable irrespective of the orientation control of the EA particles by the electric field application.

Preferably, the kinematic viscosity of this electrical insulating medium is designed to be 1 cSt to 3000 cSt. If the kinematic viscosity is below 1 cSt, the retention stability of the EA fluid lowers because of much volatile component, and on the other hand, if the kinematic is more than 3000 cSt, bubbles are generated therein and difficult to remove, thus providing troubles. That is, a discharge and spark take place at micro-areas of the bubbles at the time of the application of the electric field so that its insulating property deteriorates. For these reasons, the kinematic viscosity is preferable to be 10 cSt to 1000 cSt, particularly 10 cSt to 100 cSt.

Moreover, the voltage to be applied to the EA fluid 16 is in the range of 0.1 to 5.0 kV/mm, while a voltage higher than this range can also be applied thereto. The voltage being applied is preferable to be in the range of 0.25 to 1.5 kV/mm.

## Experimental Examples

A description will be made hereinbelow in terms of manufacturing and experimental examples according to this invention.

[Example 1]

Two ITO (indium tin oxide) glass plates each having a thickness of 1.0 mm are prepared and disposed so that the ITO surfaces are directed to the insides so as to be in opposed relation (for example, separation: 2 mm) to each other. The peripheral sections of the two ITO glass plates are sealed with a sealing member to form a cell. This cell has a through-hole which allows injection of the EA fluid thereinto.

The production example of the EA fluid used is as follows.

A mixture of a titanium hydroxide (common name: hydrous titanium oxide produced by Ishihara Sangyo Co., Ltd., C-II) (40g), a butyl acrylate (300g), a 1,3-butylene glycol dimethacrylate (100g) and a polymerization initiator was dispersed in water (1800 ml) containing a tertiary calcium phosphate (25g) as a dispersing stabilizer and suspension-polymerized while being stirred at a temperature of 60°C for one hour. The resultant product was filtered and acid-cleaned before water-cleaned and dried, thus obtaining inorganic and organic composite particles. Thereafter, using a jetstream agitator (hybridizer, manufactured by Nara Kikai Seisakusho Co., Ltd.), the inorganic and organic composite particles obtained were agitated with jet stream, before surface-polished, thereby producing the inorganic and organic composite particles. The specific gravity of the produced particles was 1.157, the average diameter thereof was 13.7 mm. The particles were uniformly dispersed in silicone oils (produced by Toshiba Silicone Co., Ltd., TSF451 series) with various kinematic viscosities so that its inclusion takes various weight % rates, thus obtaining the EA fluid samples.

[Example 2]

One glass plate (substrate) having a thickness of 2 mm was prepared and a transparent electrode layer made of an ITO (indium tin oxide) was formed on the glass plate to substantially cover the whole display surface. In addition, another glass plate was prepared and a plurality of circular electrode layers each comprising first and second circular comb-tooth-shaped line electrode layers (having a width of 50 mm) being opposite in polarity were formed on the another glass plate. Moreover, a storage plate was prepared and a plurality of through-holes having a diameter of 5 mm were formed in the storage plate so as to be successively arranged and spaced from each other. The storage plate was interposed between the two glass plates and integrally adhered thereto so that the positions of the openings of the through-holes were accurately aligned with the circular electrode layers to form a plurality of storage sections. Subsequently, various colored EA fluids were injected into the storage section.

The production example of the EA fluid used is as follows.

A mixture of a titanium hydroxide (common name: hydrous titanium oxide produced by Ishihara Sangyo Co., Ltd., C-II), a butyl acrylate, a 1,3-butylene glycol dimethacrylate and a polymerization initiator was dispersed in water containing a tertiary calcium phosphate as a dispersing stabilizer and suspension-polymerized while being stirred at a temperature of 60°C for one hour. The resultant product was filtered and acid-cleaned before water-cleaned and dried, thus obtaining inorganic and organic composite particles. Thereafter, using a jetstream agitator (hybridizer, manufactured by Nara Kikai Seisakusho Co., Ltd.), the inorganic and organic composite particles obtained were agitated with jet stream, before surface-polished, thereby producing the inorganic and organic composite particles. The specific gravity of the produced particles was 1.157, the average diameter thereof was 13.7 mm. The particles were uniformly dispersed in silicone oils (produced by Toshiba Silicone Co., Ltd., TSF451 series) with various kinematic viscosities so that its inclusion takes various weight % rates. When in the EA fluid 20% of a copper phthalocyanine blue (produced by Dainichi Seika Kogyo Co., Ltd., cyanine blue S-32) being a blue pigment was mixed into the inorganic EA material, the EA fluid was colored in blue, and when 20% of a first yellow (NL first yellow 5G(S), produced by Dainichi Seika Kogyo Co., Ltd.) being a yellow pigment was mixed thereinto, the EA fluid was colored in yellow. In addition, when a red diiron trioxide ($Fe_2O_3$) being an electrical semiconductive inorganic matter was mixed thereinto, the EA fluid can be colored in red.

[Example 3]

A mixture of 40g of a titanium hydroxide (common name: hydrous titanium oxide produced by Ishihara Sangyo Co., Ltd., C-II), 300g of a butyl acrylate, 100 g of a 1,3-butylene glycol dimethacrylate and a polymerization initiator was dispersed in water (1800 ml) containing a tertiary calcium phosphate as a dispersing stabilizer and suspension-polymerized while being stirred at a temperature of 60°C for one hour. The resultant product was filtered and acid-cleaned before water-cleaned and dried, thus obtaining inorganic and organic composite particles. Thereafter, using a jetstream agitator (hybridizer, manufactured by Nara Kikai Seisakusho Co., Ltd.), the inorganic and organic composite particles obtained were agitated with jet stream at a speed of 4000 rpm for 3 minutes, before surface-polished, thereby producing white EA particles being made of the inorganic and organic composite particles. The specific gravity of the produced particles was 1.157, the average diameter thereof was 13.7 mm. The EA particles were uniformly dispersed in silicone oils (produced by Toshiba Silicone Co., Ltd., TSF451 series) with various kinematic viscosities so that its inclusion takes 5.0% by weight, thus obtaining the white, opaque EA fluid samples.

[Preparation Example 4]

The difference of the preparation example 4 from the foregoing preparation example 3 is that a mixture of 32g of titanium hydroxide and 8g of copper phthalocyanine blue (produced by Dainichi Seika Kogyo Co., Ltd., cyanine blue S-32) being a blue pigment was used in place of the 40g of titanium hydroxide. As well as the preparation example 3, the resultant inorganic and organic composite particles was stirred with jetstream and surface-polished, thereby obtaining blue EA particles. The average diameter of the EA particles was 14.0 mm. The EA particles were dispersed in a silicone oil in the same manner as the preparation example 3, thus obtaining a blue opaque EA fluid.

[Preparation Example 5]

The difference of the preparation example 5 from the preparation example 3 is that a mixture of 32g of titanium hydroxide and a red pigment was used in place of the 40g of titanium hydroxide. As well as the preparation example 3, the resultant inorganic and organic composite particles was stirred with jetstream and surface-polished, thereby obtaining red EA particles. The average diameter of the EA particles was 14.5 mm. The EA particles were dispersed in a silicone oil in the same manner as the preparation example 3, resulting in obtaining a red EA fluid.

[Preparation Example 6]

The difference of the preparation example 6 from the foregoing preparation example 3 is that a mixture of 32g of titanium hydroxide and a yellow pigment was used in place of the 40g of titanium hydroxide. As well as the preparation example 3, the resultant inorganic and organic composite particles was stirred with jetstream and surface-polished, thereby obtaining yellow EA particles. The average diameter of the EA particles was 13.0 mm. The EA particles were dispersed in a silicone oil in the same manner as the preparation example 1 or 5, thus obtaining a yellow opaque EA fluid.

[Preparation Example 7]

The difference of the preparation example 7 from the preparation example 3 is that a mixture of 20g of titanium hydroxide and 20g of black triiron tetraoxide ($Fe_3O_4$) being an electrical semiconductive inorganic matter was used in place of the 40g of titanium hydroxide. As well as the preparation example 3, the resultant inorganic and organic composite particles was stirred with jetstream and surface-polished, thereby obtaining blackish gray EA particles. The average diameter of the EA particles was 15.4 mm. The EA particles were dispersed in a silicone oil in the same manner as the preparation example 3, with the result that a black opaque EA fluid was obtained.

[Preparation Example 8]

The difference of this example 8 from the example 4 is that the blue EA particles are dispersed in an electrical insulating medium being a mixture of a silicone oil and a yellow oil soluble dye.

[Preparation Example 9]

The difference of this example 9 from the example 8 is that a black pigment is used in place of the blue pigment to produce black EA particles, and the produced black EA particles are dispersed in electrical insulating media which are a mixture of a silicone oil and a red oil soluble dye, a mixture of a silicone oil and a green oil soluble dye, and a mixture of a silicone oil and a blue oil soluble dye.

Furthermore, a description will be made hereinbelow in terms of experimental examples of the EA fluid in this invention.

Experimental Results

Experiments of the transmitted light intensity were made using the foregoing various EA fluids. In these experiments, with strength of the electric field to the ITO electrodes taking various values, the strength of the light incident on the cell and the strength of the light passing therethrough were detected by means of optical sensors. The comparison values were expressed in dMm as the increase of light (increasing light). In this case, the increase by 3.2 dBm indicates the increase by 2.09 times in optical power and the increase by 4.2 dBm means the increase by 2.63 times in optical power.

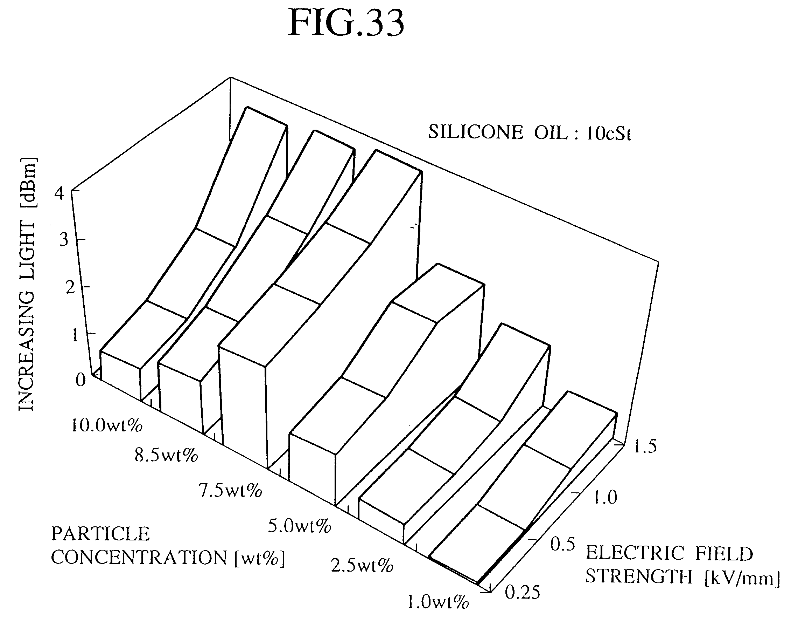

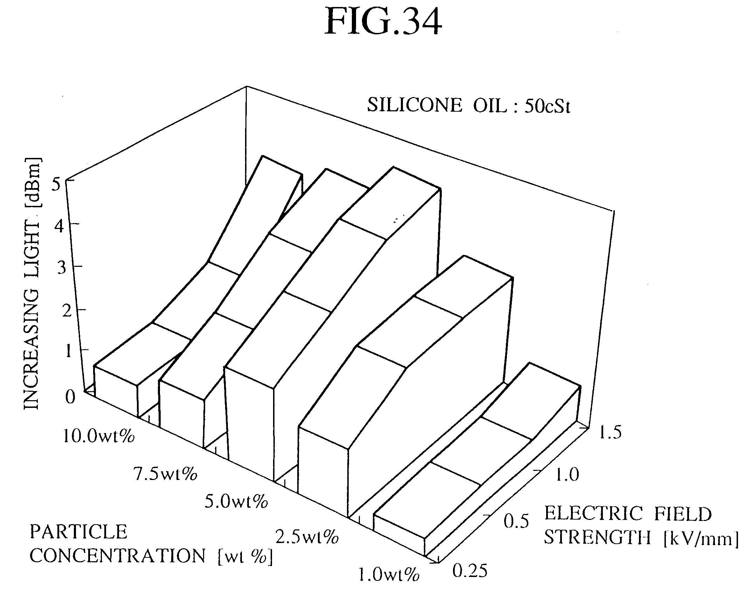

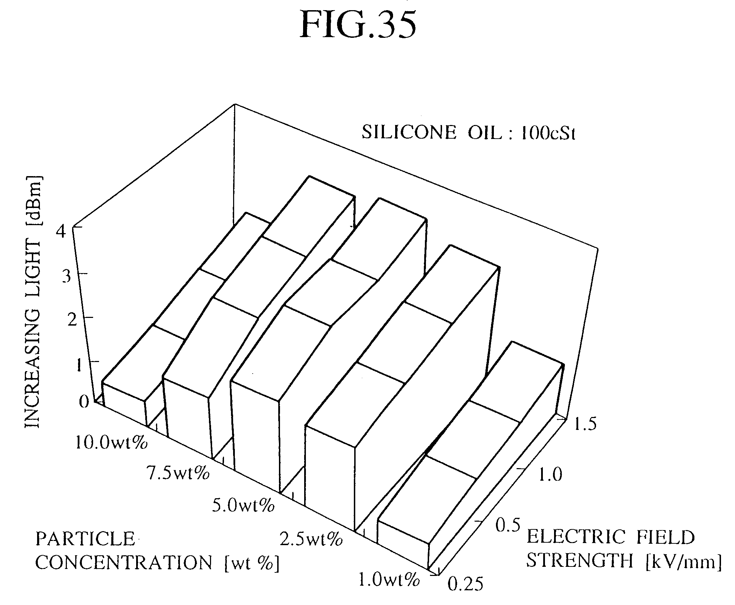

Fig. 33 shows the measurement results of the increased light in accordance with the variations of the concentration (% by weight) of the inorganic and organic composite particles and the applied electric field strength (kV/mm) in the case that the kinematic viscosity of the silicone oil (electrical insulating medium) was 10 cSt. Fig. 34 shows the experimental results thereof in the case that the kinematic viscosity of the silicone oil was 50 cSt, and Fig. 35 shows the experimental results thereof in the case that the kinematic viscosity of the silicone oil was 100 cSt.

From the results shown in Figs. 33 to 35, when the electric field strength varies from 0.25 kV/mm to 1.5 kV/mm at a given concentration, in every case the dBm value of the increasing light increased in accordance with the increase in the electric field strength. In other words, the transparency of the cell increased in accordance with the increase in the electric field strength between the electrodes. Thus, in the display device according to this invention, the transparency/opaque control of the cell is possible through the on/off control of the electric field, while the tone of the transparency is continuously or intermittently controllable by the variation of the electric field strength. This invention includes a display device in which the transparency of each cell is controlled by the variation of the electric field strength. In the case that the particulate concentration is 1.0% by weight, even if the electric field strength is 3 kV/mm, the increasing light rate results in being small. For this reason, it is obvious that the particulate concentration is preferable to be over 2.5% by weight.

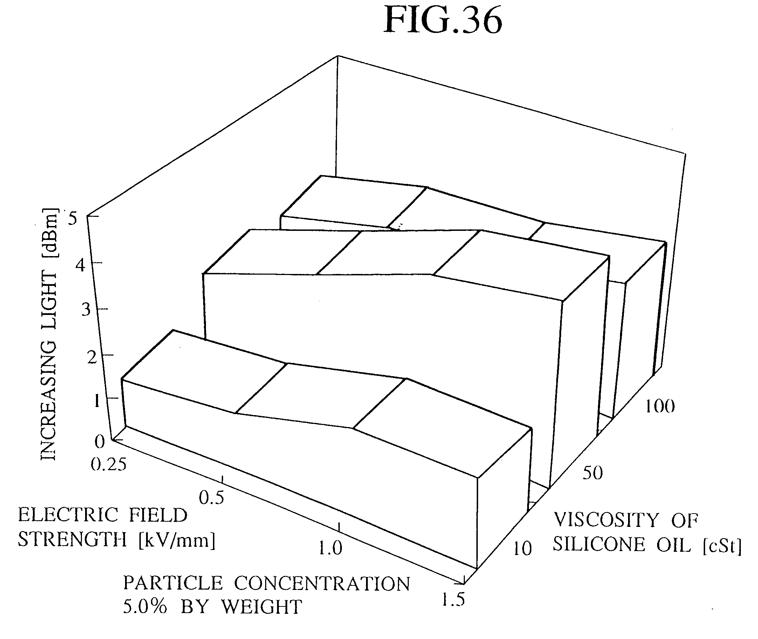

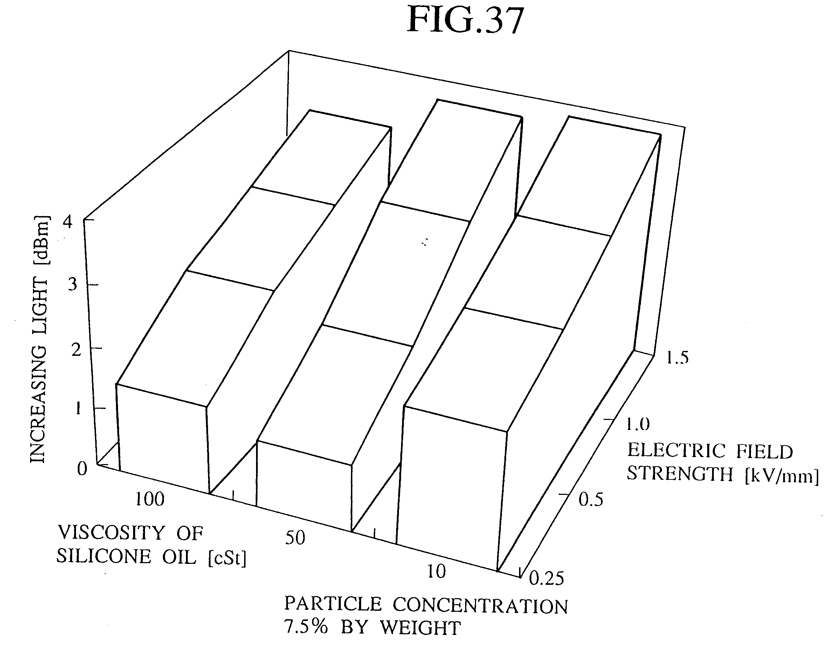

Fig. 36 shows the measurement results of the increasing light (dB) in accordance with the variation of the kinematic viscosity of the silicone oil and the electric field strength in the case that the particulate concentration is fixed to 5.0% by weight. Further, Fig. 37 shows the experimental results thereof in the case that the particulate concentration is fixed to 7.5% by weight. From the results shown in Figs. 36 and 37, even if the particulate concentration is 5.0% by weight or 7.5% by weight, when the kinematic viscosity of the silicone oil (electrical insulating medium) is in the range of 10 cSt to 100 cSt, the controllable range of the transmitted light intensity becomes at a maximum.

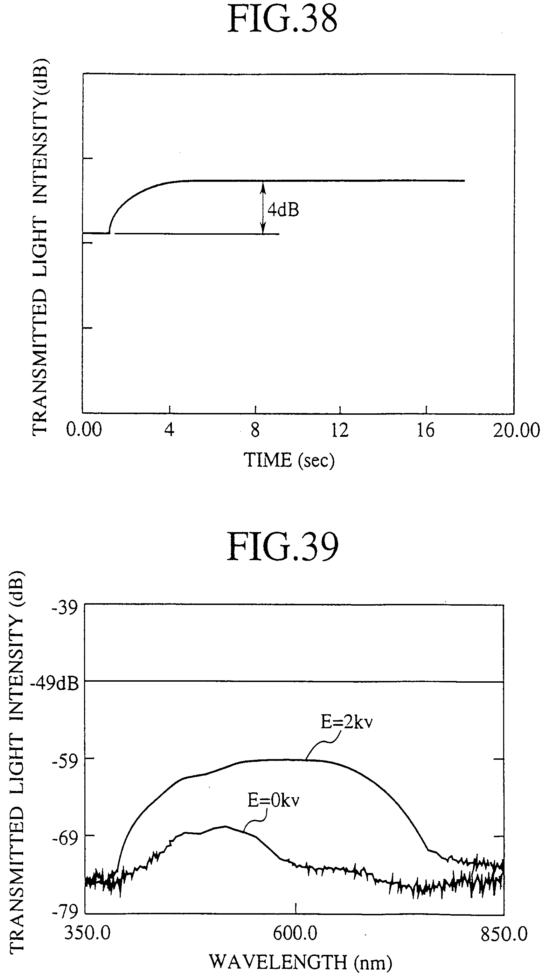

Secondly, a description will be made about the experimental examples on the electric field responsibility. The EA fluid, in which 7% by weight of inorganic and organic composite particles are dispersed in a silicone oil whose kinematic viscosity is 10 cSt, is packed in the aforementioned cell and an electric field is applied thereto. In this state, the variation of the transmitted light intensity is measured with time. The measurement results are shown in Fig. 38. In Fig. 38, the electric field was applied thereto when about one second was elapsed after the start of the measurement. From the Fig. 38 results, in this EA fluid, the transmitted light intensity starts to increase immediately after the application of the electric field and reaches a maximum of transmitted light intensity after elapse of 3 to 4 seconds before comes into a stable state.

Fig. 39 illustrates the relationship between the transmitted light intensity and the wavelength in the case that the transmitted light intensity was measured using the EA fluid in which 4% by weight of EA particles colored in blue were dispersed in a silicone oil having a kinematic viscosity of 10 cSt. For the coloring the EA particles, 20% by weight of the inorganic EA material for constituting the surface layers was substituted by a blue pigment during the production of the EA particles. In the illustration, the curve of E = 0 kV indicates the transmission wavelength spectrum at no application of the electric field, and the curve of E = 2 kV indicates the transmission wavelength spectrum at application of the electrical potential of 2 kV to the electrodes. As obvious from the comparison between both the curves in Fig. 39, the flue EA fluid allows much transmission of blue light with a short wavelength at no application of the electric field, while permits light transmission in a wide wavelength range at application of the electric field, in other words, the EA fluid turns from the blue-colored opaque state into the transparent state.

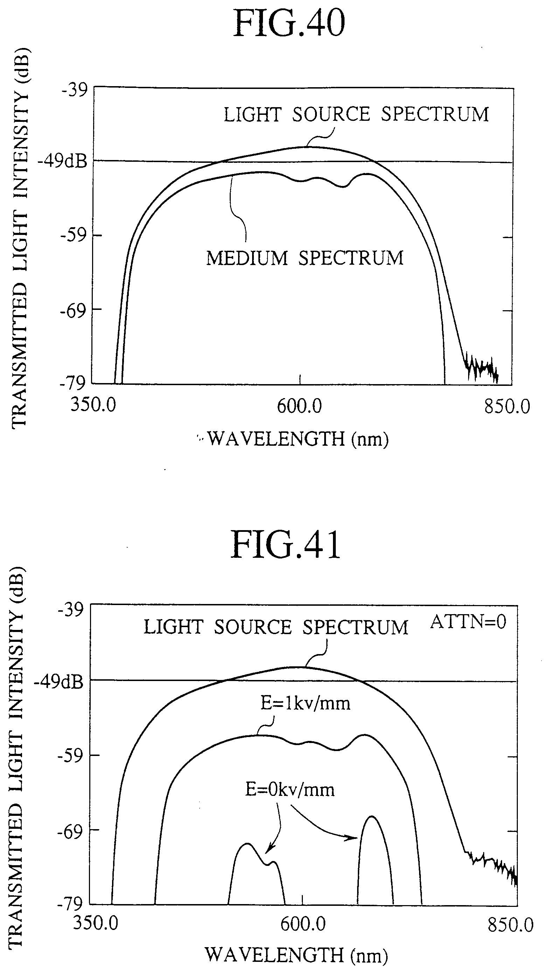

Fig. 40 shows the transmitted light spectra obtained by the measurement of the transmitted light intensity of only an electrical insulating medium (not including the EA particles) made of a dimethyl silicone oil containing 0.1% by weight of a blue dye. This electric insulating medium appears to be light blue with naked eyes. In Fig. 40, comparing the light source spectrum with the medium spectrum, the light absorption occurs at portions other than the blue spectrum portion of short wavelengths. It is obvious from this that the electrical insulating medium is colored with the dye.

Fig. 41 shows the transmitted light spectra obtained by the measurement of the transmitted light intensity of the EA fluid in which 5% by weight of yellow-colored EA particles are dispersed in an electrical insulating medium made of a dimethyl silicone oil containing 0.1% by weight of a blue dye. The inorganic and organic composite particles was colored in yellow with a yellow pigment. Shown in Fig. 41 are a light source spectrum, transmitted light spectrum at E = 0 kV/mm, and transmitted light spectrum at E = 1 kV/mm. From the illustration, the EA fluid is opaque and greenish yellow being the mixed color of flue and yellow at no application of the electric field thereto, while turning into a blue transparent state close to colorless transparency at application of the electric field thereto. Accordingly, both the EA particles and the electrical insulating medium can take various color variations and the EA fluid is reversibly changeable between a given-color opaque state and a different-color transparent state.

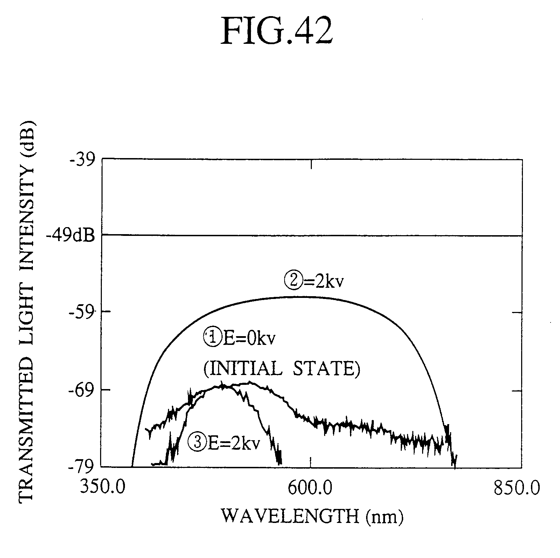

Fig. 42 shows transmitted light spectra of a picture element having an electrode plate comprising first and second electrode layers formed on one transparent substrate, the tooth portions of the first electrode layer being alternately placed between the tooth portions of the second electrode layer so as not to come into contact with each other, and further having another electrode plate comprising a facing electrode layer formed on another transparent substrate disposed in opposed relation to the first-mentioned transparent substrate. Between the electrode plates there is packed an EA fluid produced by dispersing 4% by weight of blue-colored EA particles in an electrical insulating medium being a silicone oil with a kinematic viscosity of 10 cSt. In addition, in Fig. 42, an electric field is selectively applied to between the first electrode layer and the facing electrode layer or between the first and second electrode layers.

In Fig. 42, a curve (1) indicates a transmitted light spectrum in a state where no electric field is applied to any electrode, a curve (2) shows a transmitted light spectrum in a state in which an electric field of 2 kV is applied to between the first electrode layer and the facing electrode layer, and a curve (3) indicates a transmitted light spectrum in a state where an electric field of 2 kV is applied to between the first and second electrode layers through the change-over operation of the switch. As obvious from the curve (1), the EA particles randomly float and disperse at no application of the electric field so that the EA fluid becomes opaque in the measurement wavelength band. Further, as obvious from the curve (2), in response to application of an electric field to between the first electrode layer and the facing electrode layer, the EA particles are aligned in directions perpendicular to the electrode plates, with the result that light can pass thereinto over a wide wavelength band. Moreover, as obvious from the curve (3), in response to application of an electric field to between the first and second electrode layers on the same surface, the EA particles are aligned in parallel to this surface so that light is inhibited to pass thereinto. That is, the transmittance of light is quickly changeable through the switching operation of the application of the electric field to between the electrodes.

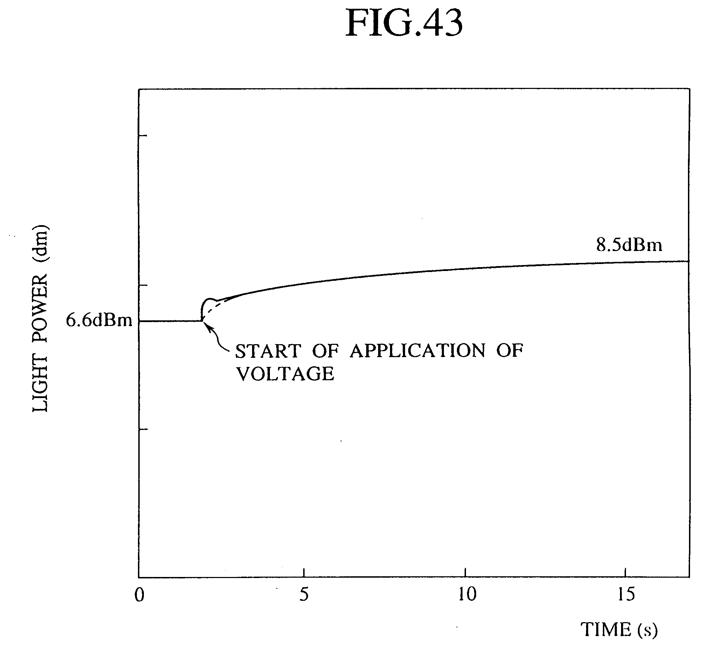

Moreover, a description will be made with reference to Fig. 43 in terms of the experimental example of the eighth embodiment shown in Figs. 22A and 22B. In this example, the EA fluid 305 was produced by dispersing 2% by weight of the EA particles 303a with an average diameter of 85 mm and 2% by weight of the EA particles 303b with an average diameter of 15 mm in the electrical insulating medium being a dimethyl silicone oil with a kinematic viscosity of 10 cSt. The voltage to be applied to between the electrodes is 1 kV. The measurement result is shown by a solid line in Fig. 43. In addition, for comparison, the EA fluid was produced by dispersing 2% by weight of the EA particles 303a with an average diameter of 85 mm and 4% by weight of the EA particles 303b with an average diameter of 15mm in a dimethyl silicone oil with a kinematic viscosity of 10 cSt. The transmitted light intensity was measured under the same conditions. The measurement result is shown by a dotted line in Fig. 43.

As obvious from Fig. 43, in the first-mentioned example, the transmitted light intensity rapidly increased immediately after the start of the application of the voltage to the cell, while in the second example (comparison example) the transmitted light intensity slowly increased in response to the application of the voltage.

The following Tables 1 and 2 show the measurement results [dBm] of transmitted light at every wavelength according to the variation of the electric field strength in the case that 5.0% by weight of EA particles are dispersed in a silicone oil (electrical insulating medium) whose kinematic viscosity is 50 cSt. In this case, the average increasing light becomes 4.2 dBm.

Table 1

| Electric Field Strength [kV/mm] | Measurement Wavelength [nm] | | | | | | | |
|---|---|---|---|---|---|---|---|---|
| | 400 | 500 | 600 | 700 | 800 | 900 | 1000 | 1100 |
| Initial State | -18.4 | -19.5 | -20.7 | -21.5 | -22.1 | -22.5 | -22.6 | -16.9 |
| 0 | 0.53 | -0.61 | -1.76 | -2.59 | -3.13 | -3.55 | -3.69 | 2.09 |
| 0.25 | 2.66 | 1.50 | 0.34 | -0.51 | -1.00 | -1.41 | -1.54 | 4.22 |
| 0.5 | 3.50 | 2.37 | 1.25 | 0.39 | -0.16 | -0.55 | -0.70 | 5.02 |
| 1.0 | 4.38 | 3.25 | 2.12 | 1.25 | 0.69 | 0.30 | 0.18 | 5.93 |
| 1.5 | 4.72 | 3.63 | 2.48 | 1.64 | 1.08 | 0.72 | 0.60 | 6.36 |

Table 2

| Values at 1.5 [kV/mm] | 4.72 | 3.63 | 2.48 | 1.64 | 1.08 | 0.72 | 0.60 | 6.36 |
|---|---|---|---|---|---|---|---|---|
| Values at -)0 [kV/mm] | 0.53 | -0.61 | -1.76 | -2.59 | -3.13 | -3.55 | -3.69 | 2.09 |
| Increasing Light [dBm] | 4.19 | 4.24 | 4.24 | 4.23 | 4.21 | 4.27 | 4.29 | 4.27 |

From the results shown in the Tables 1 and 2, in the image control of the display device in this invention, uniform light transmission property is obtainable over a wide wavelength range of 400 to 1100 nm, and uniform color tone adjustment is possible over a wide wavelength area. The visible light has a wavelength range of 480 to 780 nm, and it includes the visible light and the infrared area longer in wavelength than the visible light. Thus, the display device according to this invention can have a uniform transmitted light control performance over a wide wavelength range.

It should be understood that the foregoing relates to only preferred embodiments of the invention, and that it is intended to cover all changes and modifications of the embodiments of the invention herein used for the purpose of the disclosure, which do not constitute departures from the spirit and scope of the invention.

**Claims**

1. A color display device characterized by comprising at least three cells (10, 20, 30) layered one on each other, each of said cells (10, 20, 30) including:

first and second transparent surfaces (11a, 11b, 21a, 21b, 31a, 31b) disposed in opposed relation to each other;

first and second transparent electrode layers (12a, 12b, 22a, 22b, 32a, 32b) formed on said first and second transparent surfaces (11a, 11b, 21a, 21b, 31a, 31b), respectively, to face each other;

an electro-optical fluid composition (14, 24, 34) produced by dispersing solid particles (13, 23, 33) with an electric alignment effect in an electrical insulating medium and packed in between said first and second transparent electrode layers (12a, 12b, 22a, 22b, 32a, 32b), said solid particles (13, 23, 33) being opaque and having a color different from colors of solid particles of electro-optical fluid compositions of the other cells; and

means (15, 25, 35) for adjusting a strength of an electric field and for applying the adjusted electric field to between said first and second transparent electrode layers (12a, 12b, 22a, 22b, 32a, 32b).

2. A color display device as defined in claim 1, characterized by further comprising a third transparent electrode layer (62c) formed on said first transparent surface (61a) having said first transparent electrode layer (62a) thereon to be adjacent to said first transparent electrode layer (62a), and further comprising switching means (63) for selectively applying said electric field to between said first and third transparent electrode layers (62a, 62c), and between said first and second transparent electrode layers (62a, 62b).

3. A color display device as defined in claim 1 or 2, characterized in that said solid particles (13, 23, 33) are inorganic and organic composite particles each of which is composed of a core body (51) made of a polymer compound and a surface layer (54) including an inorganic matter exhibiting an electric alignment effect and a pigment (53).

4. A color display device characterized by comprising:
    a storage plate (121) having a plurality of hole-like storage sections (120) formed to be successively arranged therein;
    first and second electrode layers (127, 128) fixedly secured onto first and second surfaces of said storage plate (121), at least one of said first and second electrode layers (127, 128) being divided into a plurality of sections each being shaped to a configuration of an opening of each of said plurality of storage sections (120);
    an electro-optical fluid composition produced by dispersing solid particles with an electric alignment effect in an electrical insulating medium and packed in each of said storage sections (120) interposed between said first and second transparent electrode layers (127, 128); and
    means (140, 141, 142) for adjusting a voltage and for applying the adjusted voltage to between said first and second electrode layers (127, 128).

5. A color display device as set forth in claim 4, characterized in that each of said electro-optical fluid compositions enclosed in said plurality of storage sections (120) contains one of red, blue and yellow pigments, and said storage section (120) holding said photofunctional fluid composition containing said red pigment, said storage section (120) holding said photofunctional fluid composition containing said blue pigment, and said storage section (120) holding said photofunctional fluid composition containing said yellow pigment are disposed to be adjacent to each other and grouped into one storage section set.

6. A color display device as set forth in claim 4, characterized in that at least one of said solid particles and said electrical insulating medium of said photofunctional fluid composition contains a pigment.

7. A color display device as set forth in claim 5, characterized in that said solid particles of said photofunctional fluid composition contain a black pigment, and said electrical insulating medium thereof contains one of said red, blue and yellow pigments.

8. A color display device as set forth in any one of claims 4 to 7, characterized in that said storage plate (121) is colored in black.

9. A color display device as set forth in any one of claims 4 to 7, characterized by further comprising a back light (124) placed near one of said first and second surfaces of said storage plate (121).

10. A method of color-displaying a desired pattern by using a plurality of cells (120, 127, 128) each serving as a picture element, each of said plurality of cells (120, 127, 128) including an electro-optical fluid composition produced by dispersing solid particles with an electric alignment effect in an electrical insulating medium and at least one of said solid particles and said electrical insulating medium contains a pigment whose color is different from colors of the pigments of the other cells (120, 127, 128), said color-display method comprising the steps of:
    successively arranging said cells (120, 127, 128) having said photofunctional fluid composition different in color from each other; and
    changing the color of each of said plurality of cells (120, 127, 128) by selectively controlling application of an electric field to said photofunctional fluid composition of each of said plurality of cells (120, 127, 128).

11. A method of color-displaying a desired pattern by using a plurality of cells (120, 127, 128) each serving as a picture element, each of said plurality of cells (120, 127, 128) including an electro-optical fluid composition produced by dispersing solid particles with an electric alignment effect in an electrical insulating medium, said color-display method comprising the steps of:
    using at least one of said cells (120, 127. 128) having said photofunctional fluid composition colored in red with a red pigment, at least one of said cells (120, 127, 128) having said photofunctional fluid composition colored in blue with a blue pigment, and at least one of said cells (120, 127, 128) having said photofunctional fluid composition

28

colored in yellow with a yellow pigment; and

changing the color of each of said cells (120, 127, 128) by selectively controlling application of an electric field to said photofunctional fluid composition of each of said of cells.

**12.** A color-display method as set forth in claim 10 or 11, characterized in that said solid particles of said photofunctional fluid compositions in all said cells (120, 127, 128) contain a black pigment to be colored in black; and said electrical insulating medium of each of said photofunctional fluid compositions selectively contains one of red, blue and yellow pigments, and the electric field is applied to align said solid particles of each of said photofunctional fluid compositions so that the color of said pigment of said electrical insulating medium appears, and the application of the electric field is stopped to randomly disperse said solid particles of each of said photofunctional fluid compositions so that the color of said pigment of said solid particles appears.

**13.** A transmission type color display device characterized by comprising a plurality of cells (201) each including:

first and second transparent electrode plates (202a, 202b) disposed in opposed relation to each other, two or more transparent electrode layers (204a, 204b, 222a, 222b, 222c) spaced from each other being formed on said first and second transparent electrode plates (202a, 202b), and at least one of said first and second transparent electrode plates (202a, 202b) being colored; and

an electro-optical fluid composition (203) produced by dispersing solid particles (206) with an electric alignment effect in an electrical insulating medium (207) and packed in between said first and second transparent electrode plates (202a, 202b).

**14.** A transmission type color display device as set forth in claim 13, characterized in that said plurality of cells (201) are placed on the same plane, and said electrode plates (202a, 202b) of the adjacent cells (201) of said plurality of cells (201) have colors different from each other.

**15.** A transmission type color display device as set forth in claim 13, characterized in that said solid particles (206) are inorganic and organic composite particles each of which is composed of a core body (51) made of a polymer compound and a surface layer (54) including an inorganic matter exhibiting an electric alignment effect.

**16.** A display device characterized by comprising:

first and second transparent surfaces (301a, 301b) disposed in opposed relation to each other;

first and second transparent electrode layers (302a, 302b) formed on said first and second transparent surfaces (301a, 301b), respectively, to face each other;

means (311, 312) for performing on-off control of application of an electric field to between said first and second electrode layers (302a, 302b); and

an electro-optical fluid composition (305) produced by dispersing solid particles (303) with an electric alignment effect in an electrical insulating medium (304) and packed in between said first and second transparent electrode layers (302a, 302b), said solid particles (303) being made up of at least first and second groups of solid particles (303a, 303b) which are different in diameter from each other.

**17.** A display device as set forth in claim 16, characterized by further comprising a third transparent electrode layer (322c) formed on said first transparent surface (321a) having said first transparent electrode layer (322a) thereon to be adjacent to said first transparent electrode layer (322a), and further comprising switching means (323) for selectively applying said electric field to between said first and third transparent electrode layers (322a, 322c), and between said first and second transparent electrode layers (322a, 322b).

**18.** A display device as set forth in claim 16 or 17, characterized in that at least one of said solid particles (303, 324) and said electrical insulating medium (304) is colored.

**19.** A transmission type color display device as set forth in claim 16 or 17, characterized in that said solid particles (303, 324) are inorganic and organic composite particles each of which is composed of a core body (51) made of a polymer compound and a surface layer (54) including an inorganic matter exhibiting an electric alignment effect.

**20.** A reflector type color display device comprising one or more cells (410) serving as picture elements, characterized in that each of said cells (410) including:

first and second transparent electrode plates (401a, 401b) disposed in opposed relation to each other and having first and second transparent electrode layers (402a, 402b), respectively, said first electrode plate (401a) being transparent and serving as a display surface and said second electrode plate (401b) being opaque and colored; and

an electro-optical fluid composition (404) produced by dispersing solid particles (406) with an electric alignment effect in an electrical insulating medium (405) and packed in between said first and second transparent electrode plates (401a, 401b), said electrical insulating medium (405) being transparent and said solid particulate (406) being colored to have a color different from the color of said second electrode plate.

21. A color display device as set forth in claim 20, characterized in that said first electrode plate (421a) further has a third electrode layer (422c) formed so as not to contact with said first electrode layer (422a).

22. A color display device as set forth in claim 20 or 21, characterized in that said plurality of cells (410) are arranged on the same plane, and at least ones of said solid particles (406) and said electrical insulating media (405) of the adjacent cells (410) are colored to have different colors from each other.

23. A color display device as set forth in any one of claims 20 to 22, characterized in that said solid particles (406) are inorganic and organic composite particles each of which is composed of a core body (51) made of a polymer compound and a surface layer (54) including an inorganic matter exhibiting an electric alignment effect.

24. A color display device comprising one or more cells (510) serving as picture elements, characterized in that each of said cells (510) including:

first and second transparent electrode plates (501a, 501b) disposed in opposed relation to each other and having first and second electrode layers (502a, 502b), respectively; and

an electro-optical fluid composition (506) produced by dispersing solid particles (506) with an electric alignment effect in an electrical insulating medium (505) and packed in between said first and second transparent electrode plates (501a, 501b), said solid particles (506) and said electrical insulating medium (505) being produced to have different colors from each other.

25. A color display device as set forth in claim 24, characterized in that said first electrode plate (521a) further has a third electrode layer (522c) formed so as not to contact with said first electrode layer (522a).

26. A color display device as set forth in claim 24 or 25, characterized in that said plurality of cells (501) are arranged on the same plane, and at least ones of said solid particles (506) and said electrical insulating media (505) of the adjacent cells are colored to have different colors from each other.

27. A color display device as set forth in any one of claims 24 to 26, characterized in that said solid particles (506) are inorganic and organic composite particles each of which is composed of a core body (51) made of a polymer compound and a surface layer (54) including an inorganic matter exhibiting an electric alignment effect.

# FIG.1

obs

# FIG.2

# FIG.3

# FIG. 4A

# FIG. 4B

# FIG.5

# FIG.6

# FIG.7

# FIG.8

# FIG.9

FIG.10

EP 0 709 713 A2

# FIG.11

# FIG.12

128 128 128 123

128

128

128

# FIG.13

122

21

121 121

123

FIG.14

EP 0 709 713 A2

# FIG.15

123

129a

129b

128a

128b

128'

# FIG.16

122

127

128a 128b 128a

123

128'

# FIG.17

20'

20'

21

20'

# FIG.18A

obs

202b

201  204b 205b    203 206 207    208b        209

208a

210

204a 205a

202a

211

# FIG.18B

202b obs

201  204b         206         209
     205b 212     207

210

204a 205a

202a

211

# FIG. 19

# FIG.20

# FIG.21A

# FIG.21B

# FIG.22A

# FIG.22B

# FIG.23

# FIG.24

# FIG.25A

# FIG.25B

# FIG.26

# FIG.27

# FIG.28A

# FIG.28B

# FIG.29A

# FIG.29B

# FIG.30

# FIG.31

520
521a
522a 522c
526
521b
506 525 522b 505
623

BL

# FIG.32A

530

(R)

(B)

(G)

X ─────────────────────────── X'

531 532 533

# FIG.32B

531 532 533 537a
536a 536a 536b 536b 536a
543a 563b 536a 536a 536a 536a
530

(R) (B) (G)

538

534b 536c 539 541 539 540
536c 536c
537b

BL

# FIG.33

SILICONE OIL : 10cSt

INCREASING LIGHT [dBm]

4

3

2

1

0

10.0wt%

8.5wt%

7.5wt%

5.0wt%

2.5wt%

1.0wt%

PARTICLE
CONCENTRATION [wt%]

1.5

1.0

0.5

0.25

ELECTRIC FIELD
STRENGTH [kV/mm]

EP 0 709 713 A2

## FIG.34

SILICONE OIL : 50cSt

INCREASING LIGHT [dBm]

5 4 3 2 1 0

PARTICLE CONCENTRATION [wt %]

10.0wt% 7.5wt% 5.0wt% 2.5wt% 1.0wt%

ELECTRIC FIELD STRENGTH [kV/mm]

0.25 0.5 1.0 1.5

# FIG.35

SILICONE OIL : 100cSt

FIG.36

FIG.37

ELECTRIC FIELD STRENGTH [kV/mm]

PARTICLE CONCENTRATION 7.5% BY WEIGHT

VISCOSITY OF SILICONE OIL [cSt]

INCREASING LIGHT [dBm]

# FIG.38

# FIG.39

# FIG.40

# FIG.41

# FIG.42

# FIG.43

# FIG.44

# FIG.45